(19) Europäisches Patentamt
European Patent Office
Office européen des brevets

(11) **EP 2 228 419 A1**

(12) **EUROPEAN PATENT APPLICATION**

(43) Date of publication:
**15.09.2010 Bulletin 2010/37**

(51) Int Cl.:
*C09J 7/02* (2006.01)

(21) Application number: **10156068.8**

(22) Date of filing: **10.03.2010**

| | |
|---|---|
| (84) Designated Contracting States:<br>**AT BE BG CH CY CZ DE DK EE ES FI FR GB GR HR HU IE IS IT LI LT LU LV MC MK MT NL NO PL PT RO SE SI SK SM TR**<br>Designated Extension States:<br>**AL BA ME RS** | (72) Inventors:<br>• **Higuchi, Naoaki**<br>  **Ibaraki-shi Osaka (JP)**<br>• **Okamoto, Masayuki**<br>  **Ibaraki-shi Osaka (JP)**<br>• **Niwa, Masahito**<br>  **Ibaraki-shi Osaka (JP)** |
| (30) Priority: **11.03.2009 JP 2009058653** | (74) Representative: **Grünecker, Kinkeldey, Stockmair & Schwanhäusser** |
| (71) Applicant: **NITTO DENKO CORPORATION**<br>**Osaka (JP)** | **Anwaltssozietät**<br>**Leopoldstrasse 4**<br>**80802 München (DE)** |

(54) **Acrylic pressure-sensitive adhesive sheet**

(57)    The present invention relates to an acrylic pressure-sensitive adhesive sheet including: a viscoelastic material layer (X) containing hollow microspheres; and a pressure-sensitive adhesive layer (Y) provided on at least one face of the viscoelastic material layer (X) and formed from a pressure-sensitive adhesive composition including, as a main component, an acrylic copolymer which is constructed from the following monomers (m1) and (m2) as an essential monomer component, in which a content of the monomer (m1) is 50 to 99.9% by weight and a content of the monomer (m2) is 0.1 to 25% by weight based on a total amount of monomer components constituting the acrylic copolymer, (m1) an alkyl(meth)acrylate monomer including an alkyl group having 1 to 20 carbon atoms, which is represented by the following formula (1),

[Chem. 1]

$$CH_2=C(R^1)COOR^2 \tag{1}$$

in which $R^1$ represents a hydrogen atom or a methyl group, and $R^2$ represents an alkyl group having 1 to 20 carbon atoms, (m2) an N-hydroxyalkyl(meth)acrylamide monomer including a hydroxyalkyl group having 1 to 4 carbon atoms, which is represented by the following formula (2),

[Chem. 2]

$$CH_2=C(R^3)CONHR^4 \tag{2}$$

in which $R^3$ represents a hydrogen atom or a methyl group, and $R^4$ represents a hydroxyalkyl group having 1 to 4 carbon atoms.

EP 2 228 419 A1

**Description**

**FIELD OF THE INVENTION**

The present invention relates to an acrylic pressure-sensitive adhesive sheet capable of exhibiting a good adhesiveness to low polarity adherends, and good properties in both repelling resistance and holding property.

**BACKGROUND OF THE INVENTION**

A pressure-sensitive adhesive sheet using foams as a base have recently been used in various applications such as automobiles, building materials, and household appliances. In pressure-sensitive adhesive sheets to be used in these applications, good adhesiveness has been demanded for various adherends such as automotive coatings or metal, plastic, and the like. Such pressure-sensitive adhesive sheets typically include those provided with a pressure-sensitive adhesive layer formed by using a pressure-sensitive adhesive composition (acrylic pressure-sensitive adhesive composition) containing an acrylic copolymer as a base polymer. Further, these acrylic copolymers generally contain alkyl(meth)acrylate as a main body (main component), and further the copolymers which have copolymerizable compositions containing a functional group, particularly a carboxyl group-containing monomer are used for the purpose of improving adhesiveness.

For automotive use, as a measure of acid-rain on the surface of coatings, automotive acrylic coatings containing no or a reduced amount of melamine resin and having low polarity have been developed recently, further, products using low polarity plastic have been developed in building materials or house appliances.

With reference to automotive coatings or plastics having low polarity as described above, when the general acrylic pressure-sensitive adhesive is used, there is a problem that the adhesiveness or repelling resistance is poor and reliability is deteriorated.

As a pressure-sensitive adhesive sheet developing excellent pressure-sensitive adhesive force with reference to the acid-rain resistant automotive coatings, a pressure-sensitive adhesive sheet which has a pressure-sensitive adhesive layer containing a copolymer of acrylic ester monomers, carboxyl group-containing monomers and polymerizable acid anhydrides was proposed (See JP-A-2005-200513), However, it cannot be said that the pressure-sensitive adhesive sheet has a sufficient adhesiveness.

A pressure-sensitive adhesive which adherers strongly to automotive paints has been described (See US Patent No. 4,364,972). This adhesive essentially includes a reaction product made by photopolymerizing acrylic acid ester with non-tertiary alcohol (of which the alkyl groups have an average of 4 to 14 carbon atoms), and N-vinyl-2-pyrrolidone in an amount within 15 to 50 parts by weight of the total monomers. According to the above-mentioned patent document, it is described that when modification copolymerizable monomers, for example, acrylic acid, acrylonitrile, and N-substituted acrylic amide are introduced to the pressure-sensitive adhesive composition, the "rapid pressure-sensitive adhesiveness" or "pressure-sensitive adhesiveness" of an adhesive has been damaged.

In pressure-sensitive adhesive compositions having compositions similar to US Patent No. 4,364,972, JP-T-58-500130 and JP-A-2000-096012, there has been a problem that, when a certain stress was applied over a long period, it was difficult for a pressure-sensitive adhesive sheet to have good balance of durability against peeling (repelling resistance and holding property). Further, the pressure-sensitive adhesive having monomers of acrylamide backbones described in JP-A-2000-096012 have shown a strong adhesiveness with reference to low polarity automotive coatings, but have had no repelling resistance.

**SUMMARY OF THE INVENTION**

Accordingly an object of the present invention is to provide a pressure-sensitive adhesive sheet capable of exhibiting good pressure-sensitive adhesiveness, particularly adhesiveness, and good properties in both repelling resistance and holding property, particularly to provide a pressure-sensitive adhesive sheet capable of exhibiting an excellent pressure-sensitive adhesiveness, particularly adhesiveness, and good properties in both repelling resistance and holding property, to low polarity adherends such as automotive coatings having low polarity and plastics having low polarity.

As a result of intensive investigations to achieve the objects, the present inventors have found that an acrylic pressure-sensitive adhesive sheet including, on at least one face of a viscoelastic material layer (X) containing hollow microspheres, a pressure-sensitive adhesive layer formed from a pressure-sensitive adhesive composition including, as a main component, an acrylic copolymer which is constructed from specific monomers, exhibits good pressure-sensitive adhesiveness and adhesiveness, and good properties in both repelling resistance and holding property. The present invention has been made based on these findings.

Namely, the present invention relates to the following items 1 to 4.

1. An acrylic pressure-sensitive adhesive sheet including:

a viscoelastic material layer (X) containing hollow microspheres; and
a pressure-sensitive adhesive layer (Y) provided on at least one face of the viscoelastic material layer (X) and formed from a pressure-sensitive adhesive composition including, as a main component, an acrylic copolymer which is constructed from the following monomers (m1) and (m2) as an essential monomer component, in which a content of the monomer (m1) is 50 to 99.9% by weight and a content of the monomer (m2) is 0.1 to 25% by weight based on a total amount of monomer components constituting the acrylic copolymer,
(ml) an alkyl(meth)acrylate monomer including an alkyl group having 1 to 20 carbon atoms, which is represented by the following formula (1),

[Chem. 1] $CH_2=C(R^1)COOR^2$     (1)

in which $R^1$ represents a hydrogen atom or a methyl group, and $R^2$ represents an alkyl group having 1 to 20 carbon atoms,
(m2) an N-hydroxyalkyl(meth)acrylamide monomer including a hydroxyalkyl group having 1 to 4 carbon atoms, which is represented by the following formula (2),

[Chem. 2] $CH_2=C(R^3)CONHR^4$     (2)

in which $R^3$ represents a hydrogen atom or a methyl group, and $R^4$ represents a hydroxyalkyl group having 1 to 4 carbon atoms.

2. The acrylic pressure-sensitive adhesive sheet according to item 1, in which a total content of the monomers (m1) and (m2) in the acrylic copolymer is 70% by weight or more based on the total amount of the monomer components constituting the acrylic copolymer.

3. The acrylic pressure-sensitive adhesive sheet according to item 1 or 2, in which the acrylic copolymer has a glass transition temperature (Tg) of -10°C or less.

4. The acrylic pressure-sensitive adhesive sheet according to any one of items 1 to 3, in which the monomer (m2) is N-(2-hydroxyethyl) (meth)acrylamide.

According to the acrylic pressure-sensitive adhesive sheet of the invention, since the sheet has the above construction, it is possible to obtain the sheet having good pressure-sensitive adhesiveness, particularly adhesiveness, and good properties in both repelling resistance and holding property. Particularly, it is possible to obtain the sheet having a good pressure-sensitive adhesiveness, particularly adhesiveness, and good properties in both repelling resistance and holding property, to low polarity adherends such as automotive coatings having low polarity and plastics having low polarity.

## DETAILED DESCRIPTION OF THE INVENTION

The acrylic pressure-sensitive adhesive sheet of the invention includes: a viscoelastic material layer (X) containing hollow microspheres; and a pressure-sensitive adhesive layer (Y) provided on at least one face of the viscoelastic material layer (X) and formed from a pressure-sensitive adhesive composition including, as a main component, an acrylic copolymer which is constructed from the following monomers (m1) and (m2) as an essential monomer component, in which a content of the monomer (m1) is 50 to 99.9% by weight and a content of the monomer (m2) is 0.1 to 25% by weight based on a total amount of monomer components constituting the acrylic copolymer,

(m1) an alkyl(meth)acrylate monomer including an alkyl group having 1 to 20 carbon atoms, which is represented by the following formula (1),

[Chem. 3] $CH_2=C(R^1)COOR^2$     (1)

in which $R^1$ represents a hydrogen atom or a methyl group, and $R^2$ represents an alkyl group having 1 to 20 carbon atoms,
(m2) an N-hydroxyalkyl(meth)acrylamide monomer including a hydroxyalkyl group having 1 to 4 carbon atoms, which is represented by the following formula (2),

[Chem. 4] $CH_2=C(R^3)CONHR^4$     (2)

in which R[3] represents a hydrogen atom or a methyl group, and R[4] represents a hydroxyalkyl group having 1 to 4 carbon atoms.

Further, in the present application, there may be a case where "tape or sheet" is simply referred to as "tape" or "sheet".

The acrylic pressure-sensitive adhesive sheet of the invention is not particularly limited so far as it is a type where at least one pressure-sensitive adhesive face is provided by the pressure-sensitive adhesive layer (Y). It may be a double-coated pressure-sensitive adhesive sheet type of which both faces are pressure-sensitive adhesive faces, or a single-coated pressure-sensitive adhesive sheet type, of which one face only is a pressure-sensitive adhesive face.

When the acrylic pressure-sensitive adhesive sheet of the invention is a double-coated pressure-sensitive adhesive sheet type, for example, a type where a pressure-sensitive adhesive face is provided by the pressure-sensitive adhesive layer (Y) where the pressure-sensitive adhesive face is formed on both faces of the viscoelastic material layer (X); a type where a pressure-sensitive adhesive face is provided by the viscoelastic material layer (X) and the pressure-sensitive adhesive layer (Y) such that the viscoelastic material layer (X) has the pressure-sensitive adhesive force which is required as a pressure-sensitive adhesive layer; a type where a pressure-sensitive adhesive face is provided by the pressure-sensitive adhesive layer (Y) and a pressure-sensitive adhesive layer other than the pressure-sensitive adhesive layer (Y) such that the pressure-sensitive adhesive layer (Y) is formed on one face of the viscoelastic material layer (X), and a pressure-sensitive adhesive layer (for example, known and typical pressure-sensitive adhesive layers) other than the pressure-sensitive adhesive layer (Y) is formed on the other face of the viscoelastic material layer (X), and the like may be mentioned.

When the acrylic pressure-sensitive adhesive sheet of the invention is a single-coated pressure-sensitive adhesive sheet type, a pressure-sensitive adhesive face is provided by the pressure-sensitive adhesive layer (Y) only. For example, a type where the pressure-sensitive adhesive layer (Y) is formed on one face of the viscoelastic material layer (X) having no pressure-sensitive adhesive force such that the viscoelastic material layer (X) having no pressure-sensitive adhesive force is made to be a sheet as a support; a type where the pressure-sensitive adhesive layer (Y) is formed on one face of the viscoelastic material layer (X), such that the viscoelastic material layer (X) has the pressure-sensitive adhesive force which is required as a pressure-sensitive adhesive layer, and a base is formed on the other face, and the like may be mentioned.

Further, the acrylic pressure-sensitive adhesive sheet of the invention may be formed as a type where the sheet is wound in the form of roll, or a type where the sheet is laminated. That is, the acrylic pressure-sensitive adhesive sheet of the invention can have forms such as a sheet and a tape.

Viscoelastic Material Layer (X)

In the invention, the viscoelastic material layer (X) containing hollow microspheres contains at least a base polymer constituting a viscoelastic material and hollow microspheres. Accordingly, the viscoelastic material layer (X) exhibits good thickness unevenness absorbability and good stress dispersibility.

In the invention, since the viscoelastic material layer (X) of the acrylic pressure-sensitive adhesive sheet has good stress dispersibility, it exhibits good repelling resistance and good adhesiveness. Further, in the invention, since the monomer (m2) is used as a component for forming the pressure-sensitive adhesive layer (Y), an even higher level of repelling resistance can be exhibited.

As the composition for forming the viscoelastic material layer (X) (there may be a case where this composition is referred to as "viscoelastic material composition"), a composition where the hollow microspheres are blended with a base polymer constituting a viscoelastic material, and a composition where the hollow microspheres are blended with a monomer mixture to form a base polymer constituting a viscoelastic material or the partially polymerized product thereof (there may be a case where this composition is referred to as a "hollow microsphere-containing monomer mixture or the partially polymerized product thereof") may be mentioned. Further, this means that the partially polymerized product is not a completely polymerized composition. For example, a composition in a syrup state, and the like which is obtained by polymerizing a part of the monomer component, and has a conversion of approximately 10% by weight is exemplified.

The usable base polymer is not particularly limited and can be suitably selected from known base polymers. Examples of the base polymers include acrylic polymers, rubber polymers, vinyl alkyl ether polymers, silicone polymers, polyester polymers, polyamide polymers, urethane polymers, fluorine polymers and epoxy polymers. Of these base polymers, the acrylic polymers are particularly preferably used in view of good adhesiveness to the pressure-sensitive adhesive layer (Y). That is, in the invention, the viscoelastic material layer (X) is preferably an acrylic viscoelastic material layer. Further, an acrylic viscoelastic material layer is also preferred due to high degree of freedom for designing wide-ranging properties such as tackiness, elasticity, and low and high temperature adhesiveness.

Further, since the known base polymer may be used also as a base polymer of the known pressure-sensitive adhesives, there may be a case where the surface of the viscoelastic material layer (X) exhibits the pressure-sensitive adhesiveness.

The acrylic polymer is a polymer of alkyl(meth)acrylates as main monomer components. Examples of these alkyl(meth)acrylates include alkyl(meth)acrylate monomers having a linear chain or branched chain alkyl group. Examples of theses alkyl(meth)acrylate monomers include alkyl(meth)acrylates which have an alkyl group having 1 to 20 carbon atoms, such as methyl(meth)acacylates, ethyl(meth)acrylates, n-propyl(meth)acrylates, isopropyl(meth)acrylates, n-butyl(meth)acrylates, isobutyl(meth)acrylates, sec-butyl(meth)acrylates, t-butyl(meth)acrylates, pentyl(meth)aerylates, isopentyl(meth)acrylates, hexyl(meth)acrylates, heptyl(meth)acrylates, n-octyl(meth)acrylates, isooctyl(meth)acrylates, 2-ethylhexyl(meth)acrylates, nonyl(meth)acrylates, isononyl(meth)acrylates, decyl(meth)acrylates, isodeeyl (meth)acrylates, undecyl(meth)acrylates, dodecyl(meth)acrylates, tridecyl(meth)acrylates, tetradecyl(meth)acrylates, pentadecyl(meth)acrylates, hexadecyl(meth)acrylates, heptadecyl(meth)acrylates, octadecyl(meth)aczylates, nonadecyl(meth)acrylates, and eicosyl(meth)acrylates. Among them, alkyl(meth)acrytates which have an alkyl group having 2 to 14 carbon atoms are preferred, and alkyl(meth)acrylates which have an alkyl group having 2 to 10 carbon atoms are more preferred. Further, these alkyl(meth)acrylates may be used alone or in combination of two or more kinds thereof.

Further, the alkyl(meth)acrylates include alkyl(meth)acrylate monomers having an cyclic alkyl group, such as cyclopentyl(meth)acrylates, cyclohexyl(meth)acrylates, and isobornyl (meth)acrylates.

Further, since the alkyl(meth)acrylates are the main monomer components of the acrylic polymer, it is important that the content thereof is 60% by weight or more, and preferably 80% by weight or more, based on the total amount of the monomer components constituting the acrylic polymer.

Further, a copolymerizable monomer may be used as a monomer component, in addition to main monomer components in the base polymer of the viscoelastic material layer (X). Use of copolymerizable monomers as a monomer component enables the viscoelastic material layer (X) to be improved in properties such as elasticity and flexibility, or to be increased in adhesiveness to the pressure-sensitive adhesive layer (Y) by improving the cohesive force of the viscoelastic material layer (X), for example. Since the natural stress dispersibility of foams can be controlled, in the case where a strong adhesion is required in acrylic pressure-sensitive adhesive sheet of the invention, the design becomes easy. Further, copolymerizable monomers may be used alone or in combination of two or more kinds thereof.

For example, when the viscoelastic material layer (X) is an acrylic viscoelastic material layer, the acrylic polymer as the base polymer may contain, as a monomer component, copolymerizable monomers such as polar group-containing monomers and polyfunctional monomers.

Examples of the polar group-containing monomers include carboxyl group-containing monomers or the anhydrides thereof, hydroxyl group-containing monomers, sulfonicgroup-containing monomers, amide group-containing monomers, amino group-containing monomers, glycidyl group-containing monomers, cyano acrylate monomers and heterocycle-containing vinyl monomers. Examples of the carboxyl group-containing monomers or the anhydrides thereof include (meth)acrylic acid, carboxyethyl(meth)acrylates, carboxypentyl(meth)acrylates, itaconic acid, maleic acid, fumaric acid, crotonic acid, isocrotonic acid and maleic anhydride. Examples of the hydroxyl group-containing monomers include 2-hydroxyethyl(meth)acrylates, 3-hydroxypropyl(meth)acrylates, 4-hydroxybutyl (meth)acrylates, 6-hydroxyhexyl(meth)acrylates, 8-hydroxyoctyl(meth)acrylates, 10-hydroxydecyl (meth)acrylates, 12-hydroxylauryl(meth)acrylates and (4-hydroxymethylcyclohexyl)-methyl acrylate. Examples of the sulfonic group-containing monomers include 2-acrylamido-2-methylpropanesulfonie acid and sulfopropyl acrylate. Examples of the amide group-containing monomers include (meth)acrylamides, N,N-dimethyl(meth)acrylamides, N-methylol(meth)acrylamides, N-methoxymethyl (meth)acrylamides and N-butoxymethyl(meth)acrylamides. Examples of the amino group-containing monomers include aminoethyl(meth)acrylates, dimethylaminoethyl(meth)acrylates and t-butylaminoethyl (meth)acrylates. Examples of the glycidyl group-containing monomers include glycidyl(meth)acrylates and methylglycidyl(meth)acrylates. Examples of the cyano acrylate monomers include acrylonitrile and methacrylonitrile. Examples of the heterocycle-containing vinyl monomers include N-vinyl-2-pyrrolidone, (meth)acryloylmorpholine, N-vinylpyridine, N-vinylpiperidone, N-vinylpyrimidine, N-vinylpiperazine, N-vinylpyrazine, N-vinylpyrrole, N-vinylimidazole and N-vinyloxazole.

In view of obtaining suitable cohesive force in the viscoelastic material layer (X), as polar group-containing monomers, carboxyl group-containing monomers or the anhydride thereof, and hydroxyl group-containing monomers are preferable, and acrylic acid and methacrylic acid are particularly preferable.

The amount of the polar group-containing monomers is preferably 30% by weight or less (for example, 1 to 30% by weight) based on the total amount of the monomer components constituting the acrylic polymer. Further preferred is 3 to 20% by weight. When the content of the polar group-containing monomers is more than 30% by weight, there is a concern that the flexibility of the viscoelastic material layer (X) is impaired, whereby the resulting pressure-sensitive adhesive sheet may deteriorate adhesiveness to adherends, and the like having uneven surfaces. In contrast, the content of the polar group-containing monomers is less than 1% by weight, there is a concern that the cohesive force of the viscoelastic material layer (X) is lowered, whereby the resulting pressure-sensitive adhesive sheet may deteriorate holding performance as a pressure-sensitive adhesive sheet, or may deteriorate processability upon working such as cutting or punching of the sheet.

The polyfunctional monomers are not particularly limited, so far as the monomers are a compound having two or more (meth)acryloyl groups. Examples of the polyfunctional monomers include trimethylolpropane tri(meth)acrylates, tetramethylolmethane tetraacrylates, pentaerythritol di(meth)acrylates, pentaerythritol tri(meth)acrylates, pentaerythritol tetica(meth)aezylates, 1,2-ethylene glycol di(meth)acrylates, 1,4-buthylene glycol di(meth)acrylates, 1,6-hexanediol di (meth)acrylates, 1,12-dodecanediol di(meth)acrylates, dipentaerythritol monohydroxy penta(meth)acrylates, dipentaerythritol hexa(meth)acrylates, polyethylene glycol di(meth)acrylates, hexanediol di(meth)acrylates, (poly)ethylene glycol di(meth)acrylates, (poly)propylene glycol di(meth)acrylates, neopentyl glycol di(meth)acrylates, tetramethylol methane tri(meth)acrylates, allyl(meth)acrylates, vinyl(meth)acrylates, epoxy acrylates, polyester acrylates, urethane acrylates and reactive hyperbranched polymers (for example, trade name: "CN2300", "CN2301", "CN2320", and the like, made by SARTOMER corporation) having a plurality of (meth)acryloyl groups at the terminal.

The content of the polyfunctional monomers is not particularly limited, and is preferably 2% by weight or less (for example, 0.01 to 2% by weight), and is further preferably 1% by weight or less (0.02 to 1% by weight), based on the total amount of the monomer components constituting the acrylic polymer. When the content of the polyfunctional monomers is more than 2% by weight, there is a concern that the flexibility of the viscoelastic material layer (X) is impaired, whereby the resulting pressure-sensitive adhesive sheet may deteriorate adhesiveness to adherends having uneven surfaces. In contrast, the content of the polyfunctional monomers is less than 0.01% by weight, there is a concern that the cohesive force of the viscoelastic material layer (X) becomes insufficient, and therefore the resulting pressure-sensitive adhesive sheet may deteriorate holding performance as a pressure-sensitive adhesive sheet, or may deteriorate processability upon working such as cutting or punching of the sheet.

Examples of the copolymerizable monomers, other than the polar group-containing monomers and the polyfunctional monomers, include vinyl esters, aromatic vinyl compounds, olefins or dienes, vinyl ethers, alkoxyalkyl(meth) acrylate monomers, vinyl chlorides, sulfonic group-containing monomers, phosphate group-containing monomers, imide group-containing monomers, fluorine-containing (meth)acrylates and silicon-containing (meth)acrylates. Examples of the vinyl esters include vinyl acetate and vinyl propionate. Examples of the aromatic vinyl compounds include styrenevinyltoluene. Examples of the olefins or the dienes include ethylene, butadiene, isoprene and isobutylene. Examples of the vinyl ethers include vinyl alkyl ethers. Examples of the alkoxyalkyl(meth)acrylate monomers include methoxyethyl (meth)acrylates and ethoxyethyl (meth)acrylates. Examples of the sulfonic group-containing monomers include sodium vinylsulfonate. Examples of the phosphate-containing monomers include 2-hydroxyethylacryloyl phosphate. Examples of the imide group-containing monomers include cyclohexylmaleimide and isopropylmaleimide.

In the invention, the base polymer (particularly an acrylic polymer) of the viscoelastic material layer (X) is obtained by copolymerizing the monomer components. The usable polymerization methods include known solution polymerization, emulsion polymerization and mass polymerization. In the invention, from the viewpoint of workability, environmental load, and easy occurrence of a thick viscoelastic material, the curing reaction by active energy rays using a photopolymerization initiator (photoinitiator) is preferably used. Further, polymerization initiators may be used alone or in combination of two or more kinds thereof.

Examples of the photopolymerization initiators are not particularly limited, and include ketal photopolymerization initiators, α-hydroxyketone photopolymerization initiators, α-aminoketone photopolymerization initiators, acylphosphine oxide photopolymerization initiators, benzoin ether photopolymerization initiators, acetophenone photopolymerization initiators, aromatic sulfonyl chloride photopolymerization initiators, photo-active oxime photopolymerization initiators, benzoin photopolymerization initiators, benzyl photopolymerization initiators, benzophenone photopolymerization initiators and thioxanthone photopolymerization initiators.

Examples of the ketal photopolymerization initiators include 2,2-dimethoxy-1,2-diphenylethan-1-one [for example, trade name "Irgacure 651", made by Ciba Japan K.K.)]. Examples of the α-hydroxyketone photopolymerization initiators include 1-hydroxycyclohexyl phenyl ketone ("Irgacure 184" made by Ciba Japan K.K.), 2-hydroxy-2-methyl-1-phenyl-propan-1-one ("Darocure 1173" made by Ciba Japan K.K.) and 1-[4-(2-hydroxyethoxy)-phenyl]-2-hydroxy-2-methyl-1-propan-1-one ("Irgacure 2959" made by Ciba Japan K.K.). Examples of the α-aminoketone photopolymerization initiators include 2-methyl-1-[4-(methylthio)phenyl]-2-morpholinopropan-1-one ("Irgacure 907" made by Ciba Japan K.K.) and 2-benzyl-2-dimethylamino-1-(4-morpholinophenyl)-butanon-1 ("Irgacure 369" made by Ciba Japan K.K.). Examples of the acylsulfone oxide photopolymerization initiators include 2,4,5-trimethylbenzoyldiphenylphosphine oxide ("Lucirin TPO" made by BASF corporation). Examples of the benzoin ether photopolymerization initiators include benzoin methyl ether, benzoin ethyl ether, benzoin propyl ether, benzoin isopropyl ether, benzoin isobutyl ether, 2,2-dimethoxy-1,2-diphenylethan-1-one and anisole methyl ether. Examples of the acetophenone photopolymerization initiators include 2,2-diethoxyacetophenone, 2,2-dimethoxy-2-phenylacetophenone, 1-hydroxycyclohexyl phenyl ketone, 4-phenoxydichloroacetophenone and 4-(t-butyl)-dichloroacetophenone. Examples of the aromatic sulfonyl chloride photopolymerization initiators include 2-naphthalenesulfonyl chloride. Examples of the photo-active oxime photopolymerization initiators include 1-phenyl-1,1-propanedione-2-(o-ethoxycarbonyl)-oxime. Examples of the benzoin photopolymerization initiators include benzoin. Examples of the benzyl photopolymerization initiators include benzil. Examples of the benzophenone photopolymerization initiators include benzophenone, benzoylbenzoic acid, 3,3'-dimethyl-4-methoxybenzophenone, polyvinylbenzophenone and α-hydroxycyclohexyl phenyl ketone. Examples of the thioxanthone photopolymerization initiators include thioxanthone, 2-chlorothioxanthone, 2-methylthioxanthone, 2,4-dimethylthioxanthone, isopropylthioxanthone, 2,4-diisopropylthioxanthone and dodecylthioxanthone.

The amount of the photopolymerization initiators used is not limited, and when acrylic polymers are used as a base polymer of the viscoelastic material layer (X), the amount thereof is preferably 0.001 to 0.5 parts by weight, and more preferably 0.01 to 0.1 parts by weight, based on 100 parts by weight of the total monomer components constituting the acrylic polymer.

It is important to irradiate an active energy ray to the microsphere-containing polymerizable composition in order to activate the photopolymerization initiators. Examples of the active energy rays include ionizing radiations such as α-rays, β-ray, γ-rays, neutron beams and electron beams; and ultraviolet rays. In particular, the ultraviolet rays are preferably used. The irradiation dose and the irradiation time of an active energy ray, and the like are not particularly limited, as long as the photopolymerization initiators do not inhibit the reaction of monomer components.

Further, in the invention, when the base polymer (particularly an acrylic polymer) of the viscoelastic material layer (X) may be obtained by copolymerizing the monomer components, a curing reaction by thermal polymerization initiators may be used. Further, the curing reaction by thermal polymerization initiators may be used in combination with the curing reaction by the photopolymerization initiator described above. Examples of the thermal polymerization initiators include azo polymerization initiators [for example, 2,2'-azobis-2-methylbutyronitrile, dimethyl 2,2'-azobis(2-methylpropionate), 4,4'-azobis-4-eyanovaleric acid, azobisisovaleronitrile, 2,2'-azobis(2-amidinopropane) dihydrochloride, 2,2'-azobis[2-(5-methyl-2-imidazolin-2-yl)propane] dihydrochloride, 2,2'-azobis(2-methylpropionamidine) disulfate, 2,2'-azobis(N,N'-dimethyleneisobutylamidine) dihydrochloride, and the like]; and redox polymerization initiators. The amount of the thermal polymerization initiators used is not particularly limited, as long as it is within ranges usable as thermal polymerization initiators.

The viscoelastic material layer (X) includes hollow microspheres. Use of the hollow microspheres allows the viscoelastic material layer (X) to increase shear adhesive force, and further to increase processability. The hollow microspheres may be used alone or in combination of two or more kinds thereof.

The hollow microspheres may be hollow inorganic microspheres or hollow organic microspheres. Specifically, examples of the hollow inorganic microspheres in the hollow microspheres include hollow balloons made of glass, such as hollow glass balloons; hollow balloons made of metallic compounds, such as hollow alumina balloons; and hollow balloons made of a magnet, such as hollow ceramic balloons. Further, examples of the hollow organic microspheres include hollow balloons made from resins, such as hollow acrylic balloons and hollow vinylidene chloride balloons.

The particle diameter (average particle diameter) of the hollow microspheres is not particularly limited and can be selected within ranges of, for example, 1 to 500 μm, preferably 5 to 200 μm, and more preferably 10 to 100 μm.

The density of the hollow microspheres is not particularly limited and, for example, can be selected within ranges of, for example, 0.1 to 0.8 g/cm$^3$, and preferably 0.12 to 0.5 g/cm$^3$. When the density of the hollow microspheres is less than 0.1 g/cm$^3$, it is difficult to uniformly disperse the hollow microspheres in the polymerizable composition, because such microspheres tend to float, upon preparing the viscoelastic material composition [for example, when preparing a hollow microsphere-containing monomer mixture or a partially polymerized product in the case of allowing the hollow microspheres to be contained in the viscoelastic material layer (X) by blending the hollow microspheres with mixture (monomer mixture) of monomer components for forming the base polymer of the viscoelastic material layer (X)]. In contrast, when the density of the hollow microspheres is more than 0.8 g/cm$^3$, it may be expensive and may increase the production cost.

The content of the hollow microspheres is not particularly limited and is preferably 5 to 50% by volume, more preferably 10 to 50% by volume, and further preferably 15 to 40% by volume of the total volume of the viscoelastic material layer (X). When the content of the hollow microspheres is less than 5% by volume of the total volume of the viscoelastic material layer (X), there may be a case where the advantages may not be exhibited due to the addition of the hollow microspheres. In contrast, when the content is more than 50% by volume, there may be a case where viscoelasticity performance of the viscoelastic material layer (X) may be insufficient.

For handleability, the viscoelastic material composition preferably may have a viscosity adjusted to be suitable for application (generally, the viscosity of 0.3 to 40 Pa·s as measured at a temperature of 25˚C according to the viscosity determination with a Brookfield type viscometer).

When the partially polymerized product of the hollow microspheres-containing monomer mixtures is used as the viscoelastic material composition, in view of obtaining the above-mentioned viscosity, although depending on the molecular weight of a partially polymerized moiety, conversion thereof is about 2 to 40% by weight, and preferably 5 to 20% by weight. The partial polymerization is generally conducted by irradiation with an active energy ray, particularly ultraviolet rays, while avoiding contact with oxygen.

The conversion of the partially polymerized product is determined in the following manner. About 0.5 g of the partially polymerized product is precisely weighed, dried at 130˚C, for 2 hours, the dried sample is precisely weighed, whereby a weight loss [a volatile component (weight of unreacted monomers)] is determined, and the determined weight loss is substituted in the following equation: Conversion (% by weight) of the partially polymerized product = [1-(Weight loss)/(Weight of the partially polymerized product before drying)]$\times$100

The viscosity of the viscoelastic material composition may also be adjusted by adequately blending thickening polymers. Examples of the thickening polymers include acrylic polymers obtained by copolymerizing the alkyl(meth) acrylate with acrylic acid, acrylamide, acrylonitrile, acryloylmorpholine, or the like; styrene-butadiene rubbers (SBRs); isoprene rubbers; styrene-butadiene block copolymers (SBSs); ethylene-vinyl acetate copolymers; acrylic rubbers; polyurethanes; and polyesters. Further, the thickening polymers may be used alone or in combination of two or more kinds thereof.

From the view point of improving cushioning property and adhesion, the viscoelastic material layer (X) may contain cells in addition to the hollow microspheres.

Cell structures to be contained in the viscoelastic material layer (X) are not particularly limited, and may be any one of closed cell structures, interconnected cell structures, and cell structures (semi-interconnected semi-closed cell structure) which mix the closed cell structures with the interconnected cell structures.

The method of containing cells in the viscoelastic material layer (X) is not particularly limited. Known or typical methods may be used. Cells may be contained by (1) a process of forming the viscoelastic material layer (X) with a viscoelastic material composition in which a gas component that forms cells (hereinafter there may be a case where this composition is referred to as a "cell-forming gas") is mixed; or by (2) a process of forming the viscoelastic material layer (X) using a viscoelastic material composition further containing a blowing agent. In the invention, a viscoelastic material containing cell-mixed fine particles is typically made to contain cells by the process (1). Examples of the blowing agent are not particularly limited, and can be suitably selected from known blowing agents such as heat-expandable microspheres.

The amount of cells to be mixed in the viscoelastic material layer (X) is not particularly limited, and can be suitably selected depending on the purpose. The amount thereof may be, for example, 3 to 30% by volume, preferably 8 to 26% by volume, and more preferably 13 to 22% by volume, based on the total volume of the viscoelastic material containing cell-mixed fine particles. When the mixed amount is less than 3% by volume, their advantages due to the mixed cells may not be exhibited. In contrast, when the content is more than 30% by volume, there is a concern that it may result in cells penetrating through the viscoelastic material layer (X), and this may deteriorate viscoelasticity performance and appearance.

Further, such cells generally have spherical shapes (particularly, true spherical shape), but they may have deformed spherical shapes. The average cell size (diameter) of cells is not particularly limited, and for example, can be selected within ranges of typically 1 to 1000 $\mu$m, preferably 10 to 500 $\mu$m, and further preferably 30 to 300 $\mu$m.

A cell component (a gas component forming cells; "cell-forming gas") contained in the cells is not particularly limited and can use various kinds of gaseous components including inert gas such as nitrogen, carbon dioxide, or argon, or air. When a reaction such as polymerization is conducted after mixing a cell-forming gas into the composition, it is important that the cell-forming gas should be one not inhibiting the reaction. As the cell-forming gases, the nitrogen is preferred from the viewpoints that it does not inhibit the reaction and is inexpensive, and the like.

Surfactants may be added to the viscoelastic material composition in order to stably mix fine cells. Examples of the surfactants include hydrocarbon surfactants, silicone surfactants and fluorine surfactants.

As the fluorine surfactants, fluorine surfactants having an oxy-$(C_{2-3})$alkylene group and a fluorinated hydrocarbon group per molecule are used. The oxy-$(C_{2-3})$alkylene group is represented by the formula: -R-O- (in which R represents a linear chain or branched chain alkylene group having 2 or 3 carbon atoms). The fluorine surfactants are not particularly limited, as long as each contain an oxy-$(C_{2-3})$alkylene group and a fluorinated hydrocarbon group per molecule. Nonionic surfactants are preferred, from the viewpoint of dispersibility in the base polymer. Further, the fluorine surfactants may each contain any one of an oxyethylene group ($-CH_2CH_2O-$) and an oxypropylene group [$-CH_2CH(CH_3)$O-] per molecule, or a combination of two or more kinds thereof.

Examples of the oxy-$(C_{2-3})$alkylene group include an alcohol in which the terminal oxygen atom is bonded to hydrogen atom; an ether in which the terminal oxygen atom is bonded to another hydrocarbon group; an ester in which the terminal oxygen atom is bonded via a carbonyl group to another hydrocarbon group, and the like. The oxy-$(C_{2-3})$ alkylene group may have any form. The oxy-$(C_{2-3})$alkylene group may also have part of a cyclic structure such as a cyclic ether or lactone.

The fluorinated hydrocarbon group is not particularly limited, but is preferably a perfluoro group. The perfluoro group may be monovalent or multivalent (divalent or higher). The fluorinated hydrocarbon group may have a double bond or a triple bond and may have any of linear, branched, and cyclic structures. The number of carbon atoms of the fluorinated hydrocarbon group is not particularly limited and is 1 or 2 or more, preferably 3 to 30, and more preferably 4 to 20.

The structures of the fluorine surfactants are not particularly limited, and for example, copolymers containing, as a monomer component, a monomer having an oxy-$(C_{2-3})$alkylene group and a monomer having a fluorinated hydrocarbon group can be preferably used. These copolymers can use suitably any of block copolymers, graft copolymers, and the like.

Examples of the block copolymers (copolymers having an oxy-($C_{2-3}$) alkylene group and a fluorinated hydrocarbon group in principal chain) include polyoxyethylene perfluoroalkyl ethers, perfluoroalkylated polyoxyethylenes, polyoxypropylene perfluoroalkyl ethers, polyoxyisopropylene perfluoroalkyl ethers, perfluoroalkylated polyoxyethylene sorbitans, perfluoroalkylated polyoxyethylene polyoxypropylene block copolymers and perfluoroalkylated polyoxyethylene glycols.

As graft copolymers (copolymers having an oxy-($C_{2-3}$)alkylene group and a fluorinated hydrocarbon group in side chain), copolymers containing, as a monomer component, at least a vinyl compound having a polyoxyalkylene group and a vinyl compound having a fluorinated hydrocarbon group, particularly acrylic copolymers are preferably used.

Examples of the vinyl compounds having a polyoxyalkylene group include polyoxyalkylene (meth)acrylates such as polyoxyethylene (meth)acrylates, polyoxypropylene (meth)acrylates and polyoxyethylene polyoxypropylene (meth)acrylates.

Examples of the vinyl compounds having a fluorinated hydrocarbon group include (meth)acrylic acid esters containing a fluorinated hydrocarbon, including perfluoroalkyl(meth)acrylates such as perfluorobutyl (meth)acrylates, perfluoroisobutyl(meth)acrylates, perfluoropentyl(meth)acrylates, and the like.

The fluorine surfactants may further contain structures other than the above structure in molecule thereof, such as an alicyclic hydrocarbon group and an aromatic hydrocarbon group. It may also contain a variety of functional groups such as a carboxyl group, a sulfonic group, a cyano group, an amide group, and an amino group, within ranges not impeding dispersibility in the base polymer. For example, when a fluorine surfactant is a vinyl copolymer, the usable monomer components include monomer components copolymerizable with the vinyl compound having a polyoxyalkylene group and the vinyl compound having a fluorinated hydrocarbon group. These monomers can be used alone or in combination of two or more kinds thereof.

Preferred copolymerizable monomer components, for example, include $C_{1-20}$ alkyl(meth)acrylates such as undecyl(meth)acrylates and dodecyl(meth)acrylates; (meth)acrylic acid esters having an alicyclic hydrocarbon group, such as cyclopentyl(meth)acrylates; and (meth)acrylic acid esters having an aromatic hydrocarbon group, such as phenyl (meth)acrylates. Examples of the copolymerizable monomer components further include carboxyl group-containing monomers such as maleic acid and crotonic acid; sulfonic group-containing monomers such as sodium vinylsulfonate; aromatic vinyl compounds such as styrene and vinyltoluene; olefins or dienes, such as ethylene and butadiene; vinyl ethers such as vinyl alkyl ethers; amide group-containing monomers such as acrylamide; amino group-containing monomers such as (meth)acryloylmorpholine; glycidyl group-containing monomers such as glycidyl methyl(meth)acrylates; isocyanate group-containing monomers such as 2-methacryloyloxyethyl isocyanate. Examples of the usable copolymerizable monomers further include polyfunctional copolymerizable monomers (polyfunctional monomers) such as dipentaerythritol hexa(meth)acrylates and divinylbenzene.

The fluorine surfactant can have any molecular weight without particular limitations. However, the adhesion and frictional resistance between the base polymers in the viscoelastic material composition and the hollow microspheres are highly effectively reduced, when the fluorine surfactant is one having a weight-average molecular weight of less than 20000 (for example, 500 or more, but less than 20000). When such a fluorine surfactant having a weight-average molecular weight of less than 20000 is used in combination with another fluorine surfactant having a weight-average molecular weight of 20000 or more (for example, 20000 to 100000, preferably 22000 to 80000, and more preferably 24000 to 60000), mixability of cells and stability of mixed cells are improved.

Examples of the fluorine surfactants having an oxy-($C_{2-3}$)alkylene group and a fluorinated hydrocarbon group and having a weight-average molecular weight of less than 20000 include "FTERGENT 251" made by NEOS Co., Ltd.; "FTX-218" made by NEOS Co., Ltd.; "Megafac F-477" made by DIC Corporation.; "Megafac F-470" made by DIC Corporation.; "Surflon S-381" made by AGC Seimi Chemical Co., Ltd.; "Surflon S-393" made by AGC Seimi Chemical Co., Ltd.; "Surflon KH-20" made by AGC Seimi Chemical Co., Ltd.; "Surflon KH-40" made by AGC Seimi Chemical Co., Ltd., and the like, and any of these can be suitably used.

Examples of the fluorine surfactants, having an oxy-($C_{2-3}$) alkylene group and a fluorinated hydrocarbon group and having a weight-average molecular weight of 20000 or more include "EFTOP EF-352" made by JEMCO Inc.; "EFTOP EF-8041" made by JEMCO Inc.; "Unidyne TG-656" by Daikin Industries, Ltd., and the like. Any of these can be suitably used herein.

The amount of the fluorine surfactants used is not particularly limited, and for example can be selected within ranges of 0.01 to 5 parts by weight, preferably 0.01 to 3 parts by weight, and more preferably 0.03 to 1 parts by weight, based on 100 parts by weight of the total monomer components for constituting the base polymer of the viscoelastic material layer (X) [particularly based on 100 parts by weight of total monomer components for constituting the acrylic polymer containing alkyl(meth)acrylates as main monomer components]. When the amount of the fluorine surfactants used is less than 0.01 parts by weight, the surfactants may not sufficiently act to reduce viscoelasticity performance. In contrast, when fluorine surfactants are more than 5 parts by weight, the surfactants may exhibit insufficient viscoelasticity performance.

The viscoelastic material composition for the formation of the viscoelastic material layer (X) may further contain suitable additives according to the use thereof, in addition to the above-mentioned components (the fluorine surfactants, a base polymer, hollow microspheres, polymerization initiator, monomer mixture, the partially polymerized product, and the like). Examples of the usable additives include crosslinking agents (for example, polyisocyanate crosslinking agents, silicone crosslinking agents, epoxy crosslinking agents, alkyl-etherified melamine crosslinking agents, and the like); tackifiers (for example, tackifiers that are solid, semisolid, or liquid at room temperature including rosin derivative resins, polyterpene resins, petroleum resins, oil-soluble phenolic resins, and the like); plasticizers; fillers; aging inhibitors; and colorants (pigments, dyes, or the like). For example, when a base polymer is formed by photopolymerization, the layer may be colored by using pigments (coloring pigments) within the ranges not inhibiting photopolymerization. When the viscoelastic material layer (X) is to be colored to black, for example, carbon black may be used. For example, the amount of the carbon black as a coloring pigment used, is preferably 0.15 parts by weight or less (for example, 0.001 to 0.15 parts by weight), and more preferably 0.02 to 0.1 parts by weight, based on 100 parts by weight of the total monomer components for constituting the base polymer of the viscoelastic material layer (X) [particularly the total monomer components for constituting the acrylic polymer containing alkyl(meth)acrylates as main monomer components], in view of degree of coloration and not inhibiting photopolymerization reaction.

In the invention, in order that cells are mixed stably and caused to be present in the viscoelastic material composition, cells are preferably blended and mixed as the last component in the viscoelastic material composition. In particular, it is preferred that the viscoelastic material composition before mixing cells (hereinafter there may be a case where this composition is referred to as a "precursor for cell-containing viscoelastic material") has an increased viscosity. The viscosity of the precursor for the cell-containing viscoelastic material is not particularly limited, as long as it has a viscosity to maintain the mixed cells stably, but the viscosity is, for example, preferably 5 to 50 Pa·s (BH type viscometer, rotor: No. 5 rotor, number of revolutions: 10 rpm, temperature: 30˚C.) and more preferably 10 to 40 Pa·s. When the viscosity of precursor is less than 5 Pa·s, there may be a case where the visosity is too low, and thus cell enlargement of mixed cells is immediately occur to thereby escape out of the system. In contrast, when the viscosity is more than 50 Pa·s, there may be a case where the visosity is too high, and thus it is difficult to form the viscoelastic material layer (X).

The viscosity of the precursor for the cell-containing viscoelastic material may be adjusted, for example, by blending various polymer components such as acrylic rubbers and thickening additives; or by polymerizing a part of monomer components for forming the base polymer [for example, monomer components such as (meth)acrylates for forming acrylic base polymers, and the like]. Specifically, for example, a precursor for the cell-containing viscoelastic material having such a suitable viscosity for stably containing cells can be prepared by mixing monomer components for forming the base polymer [for example, monomer components such as (meth)acrylates for forming acrylic polymers, and the like] with polymerization initiators (for example, photoinitiators, and the like) to obtain a monomer mixture; performing a polymerization reaction of the monomer mixture depending on the type of polymerization initiators, to obtain a composition (a syrup type composition or syrup) in which only a part of the monomer components have been polymerized; and blending and mixing hollow microspheres, and surfactants or additives according to necessity into the syrup. By introducing and mixing cells into the precursor for the cell-containing viscoelastic material, a viscoelastic material composition stably containing cells can be obtained. Surfactants and additives may be previously blended in advance into the monomer mixture as appropriate in the preparation of the syrup.

In the invention, the method to obtain a viscoelastic material composition by introducing and mixing cells into the precursor for the cell-containing viscoelastic material is not particularly limited, and a known technique for mixing cells can be employed. For example, an example of the device is one that includes, a stator having a multiplicity of fine teeth arranged on a disc having a through hole at the center part, and a rotor facing the stator and having fine teeth similar to the stator arranged on the disc. In this device, the precursor for the cell-containing viscoelastic material is introduced in between the teeth on the stator and the teeth on the rotor, and a gaseous component for forming cells (cell-forming gas) is introduced via the through hole into the precursor for the cell-containing viscoelastic material while rotating the rotor at high speed, thereby obtaining a viscoelastic material composition in which the cell-forming gas is finely dispersed and mixed in the precursor for the cell-containing viscoelastic material.

To suppress or prevent cell enlargement, it is desirable to perform the steps from the mixing of cells to the formation of the viscoelastic material layer (X) continuously as a series of steps. That is, it is desirable that a viscoelastic material composition is prepared by mixing cells in the above-mentioned method, and then the resulting viscoelastic material composition is used for the formation of the viscoelastic material layer (X).

The method to form the viscoelastic material layer (X) is not particularly limited. For example, the viscoelastic material layer (X) is formed by applying a viscoelastic material composition on a suitable support such as a release film or a base to form a layer of viscoelastic material composition, and by curing (for example, thermal curing or curing by an active energy ray) and/or drying the layer according to necessity. When curing by an active energy ray (photocuring) is performed, photopolymerization reaction is hindered by the oxygen in air. Accordingly, it is preferred that oxygen-blocking is carried out by affixing a release film (separator) to the coated layer, or by performing the photocuring in a nitrogen atmosphere, and the like. Further, the release film (separator), and the like used in the formation of the viscoelastic material layer (X) may be peeled during a suitable step at the time of producing the acrylic pressure-sensitive adhesive sheet of the invention or may be peeled at the time of using the produced acrylic pressure-sensitive adhesive sheet.

The thickness of the viscoelastic material layer (X) is not particularly limited, and, for example, can be selected within ranges of typically 200 to 5000 $\mu$m, preferably 300 to 4000 $\mu$m, and more preferably 400 to 3000 $\mu$m. When the viscoelastic material layer (X) has a thickness of less than 200 $\mu$m, the cushioning property is lowered, and the adhesiveness to curved surfaces or uneven surfaces is lowered. In contrast, when the thickness is more than 5000 $\mu$m, it is difficult to obtain the layer having a homogeneous thickness or the sheet having a homogeneous thickness. Further, the viscoelastic material layer (X) may have any of a single-layer form or multilayer form.

The viscoelastic material layer (X) itself can be a pressure-sensitive adhesive sheet having a pressure-sensitive adhesive force necessary for a pressure-sensitive adhesive sheet, by controlling the type and amount of the base polymer and the types and amounts of other additives to be contained in the viscoelastic material layer (X). Further, the viscoelastic material layer (X) can also be a non-adhesive sheet as a support by suitably selecting its formulation.

Pressure-Sensitive Adhesive Layers (Y)

The pressure-sensitive adhesive layers (Y) are formed in at least one face of the viscoelastic material layer (X), and provides a pressure-sensitive adhesive face of an acrylic pressure-sensitive adhesive sheet of the invention. The pressure-sensitive adhesive faces which are provided by the pressure-sensitive adhesive layers (Y) exhibit a good adhesiveness to various adherends including automotive coatings which are low polarity, or low polarity adherends such as polyolefin (for example, polyethylene, polypropylene, and the like).

The pressure-sensitive adhesive composition for forming the pressure-sensitive adhesive layers (Y) has, as a main component, an acrylic copolymer which includes monomers (m1) and (m2) as an essential monomer component, in which the content of the monomer (m1) is 50 to 99.9% by weight and the content of the monomer (m2) is 0.1 to 25% by weight, based on the total amount of the monomer components. That is, the composition has, as a main component, an acrylic copolymer which includes monomers (m1) and (m2) or monomers (m1), (m2), and (m3), in which the content of the monomer (m1) is 50 to 99.9% by weight, the content of the monomer (m2) is 0.1 to 25% by weight, and the content of the monomer (m3) is 0 to 30% by weight, based on the total amount of the monomer components. Further, in the invention, the monomers (m1) and (m2) are essential monomer components, and the monomer (m3) is an optional monomer component used according to necessity.

In the pressure-sensitive adhesive composition for forming the pressure-sensitive adhesive layer (Y), it is important that an acrylic copolymer is the main copolymer and is 50% by weight or more, is preferably 60% by weight or more, based on the total amount of the solid content of the pressure-sensitive adhesive composition. The acrylic copolymer is obtained by copolymerizing at least the monomers (m1) and (m2).

The monomer (m1) is an alkyl(meth)acrylate monomer including an alkyl group having 1 to 20 carbon atoms, which is represented by the following formula (1).

$$[\text{Chem. 5}] \ CH_2=C(R^1)COOR^2 \qquad (1)$$

In formula (1), $R^1$ represents a hydrogen atom or a methyl group, and $R^2$ represents an alkyl group having 1 to 20 carbon atoms.

Further, an alkyl group having 1 to 20 carbon atoms of $R^2$ may be a linear or branched chain alkyl group, and a cyclic alkyl group.

The monomer (m1) is alkyl(meth)acrylate monomers including an alkyl group (linear chain and branched chain alkyl group) has 1 to 20 carbon atoms, which is represented by forumula (1). Examples of the monomers include methyl (meth)acrylates, ethyl(meth)acrylates, n-propyl(meth)acrylates, isopropyl(meth)acrylates, n-butyl(meth)acrylates, isobutyl(meth)acrylates, secbutyl(meth)acrylates, t-butyl(meth)acrylates, pentyl(meth)acrylates, isopentyl(meth)acrylates, hexyl(meth)acrylates, beptyl(meth)acrylates, n-octyl(meth)acrylates, isooctyl(meth)acrylates, 2-ethylhexyl(meth)acrylates, nonyl(meth)acrylates, isononyl(meth)acrylates, decyl(meth)acrylates, isodeoyl(meth)acrylates, undecyl(meth) acrylates, dodecyl(meth)acrylates, tridecyl(meth)acrylates, tetradecyl(meth)acrylates, pentadecyl(meth)acrylates, hexadecyl(meth)acrylates, heptadecyl(meth)acrylates, octadecyl(meth)acrylates, nonadecyl(meth)acrylates and eicosyl (meth)acrylates. Among them, alkyl(meth)acrylate monomers which have an alkyl group having 2 to 14 carbon atoms are preferred, and alkyl(meth)acrylate monomers which have an alkyl group having 4 to 12 carbon atoms are further preferred. These alkyl(meth)acrylates may be used alone or in combination of two or more kinds thereof.

Further, the monomer (m1) is alkyl(meth)acrylate monomers including an alkyl group having 1 to 20 carbon atoms, which is represented by forumula (1). Examples of the monomers also include alkyl(meth)acrylate monomers having an cyclic alkyl group, such as cyclopentyl (meth)acrylates, cyclohexyl(meth)acrylates, and isobornyl (meth) acrylates.

In the acrylic copolymer, the content of the monomer (m1) is 50 to 99.9% by weight, preferably 53 to 99% by weight, and more preferably 55 to 90% by weight, based on the total amount (total monomer components) of monomer components constituting an acrylic copolymer. When the content is less than 50% by weight, there may be a case where the flexibility is lowered.

The monomer (m2) is an N-hydroxyalkyl(meth)acryl amide monomer including a hydroxyalkyl group having 1 to 4 carbon atoms, which is represented by the following formula (2).

[Chem. 6] $CH_2=C(R^3)CONHR_4$    (2)

In the formula (2), $R^3$ represents a hydrogen atom or a methyl group, and $R^4$ represents a hydroxyalkyl group having 1 to 4 carbon atoms.

The monomer (m2) can improve the cohesiveness and stress relaxation of the pressure-sensitive adhesive layer (Y). Further, the durability of the pressure-sensitive adhesive layer (Y) may be improved regarding the phenomena similar to those applying a constant force for a long period of time, similarly to repelling resistance, and foaming peeling resistance test. Further, since the monomer (m2) has a hydroxyl group as a reactive functional group, a crosslinked structure may be formed by reacting a hydroxyl group with crosslinking agents having an isocyanate group, an epoxy group, and the like. Therefore, the pressure-sensitive adhesive layer (Y) is excellent in repelling resistance, holding force property, foaming peeling resistance property and holding property. Further, the monomer (m2) has suitable polarity strength, and hence suitable polarity strength can be provided for the pressure-sensitive adhesive layer (Y).

The monomer (m2) is an N-hydroxyalkyl(meth)acryl amide monomer including a hydroxyalkyl group having 1 to 4 carbon atoms, which is represented by the following formula (2). Examples of the monomers include N-methylol (meth)acrylamide, N-(2-hydroxyethyl)acrylamides, N-(2-hydroxyethyl)methacrylamides, N-(2-hydroxypropyl)acrylamides, N-(2-hydroxypropyl)methacrylamides, N-(1-hydroxypropyl)acrylamides, N-(1-hydroxypropyl)methacrylamides, N-(3-hydroxypropyl)acrylamides, N-(3-hydroxypropyl)methacrylamides, N-(2-hydroxybutyl)acrylamides, N-(2-hydroxybutyl)methacrylamides, N-(3-hydroxybutyl)acrylamides, N-(3-hydroxybutyl)methacrylamides, N-(4-hydroxybutyl)acrylamides, N-(4-hydroxybutyl)methacrylamides and N-methyl-N-2-hydroxyethyl(meth)acrylamides, Among them, from the viewpoint of suitable cohesive force and stress relaxation, N-(2-hydroxyethyl)acrylamides, N-(2-hydroxyethyl)methacrylamides, N-methylol(meth)arylamide, N-(3-hydroxypropyl)acrylamides, and the like are preferred, and N-(2-hydroxyethyl)acrylamides, N-(2-hydroxyethyl)methacrylamides, and N-methylol(meth)arylamide are particularly preferred.

Further, when two kinds or more of the monomers (m2) are used, the balance of pressure-sensitive adhesiveness further becomes good. "The balance of pressure-sensitive adhesiveness becomes good" means that there is a good balance of properties such as pressure-sensitive adhesive force, tackiness, durability, holding property, and repelling resistance.

In an acrylic copolymer, the content of the monomer (m2) is 0.1 to 25% by weight, preferably 1 to 23% by weight, and more preferably 3 to 20% by weight, based on the total amount (total monomer components) of monomer components constituting an acrylic copolymer. When the content is less than 0.1% by weight, there may be a case where the pressure-sensitive adhesive layer (Y) cannot exhibit the repelling resistance. In contrast, when the content is more than 25% by weight, there may be problems in the tackiness or the pressure-sensitive adhesive force of the pressure-sensitive adhesive layer (Y).

In an acrylic copolymer, it is important that the total amount of the monomers (m1) and (m2) is preferably 70% by weight or more, and further preferably 75% by weight or more, based on the total amount (total monomer components) of monomer components constituting an acrylic copolymer. When the total amount of the monomers (m1) and (m2) is less than 70% by weight, there may be problems in adhesive reliability to poorly adherent adherends.

Further, as a monomer component constituting an acrylic copolymer in the invention a monomer (m3) (there may be a case where such is referred to as a "copolymerizable monomer" for short) copolymerizable with the monomers (m1) and (m2), in addition to the monomers (m1) and (m2), may be used. When a copolymerizable monomer is used, the balance of pressure-sensitive adhesiveness (pressure-sensitive adhesive force, tackiness, durability, holding property and repelling resistance) is easily obtained. Further, one kind or two kinds or more of the monomer (m3) may be used.

These copolymerizable monomers (m3), for example, include carboxyl group-containing monomers such as ethylenically unsaturated monocarboxylic acid (for example, acrylic acid, methacrylic acid, crotonic acid, carboxyethyl acrylate, carboxypentyl acrylate, and the like), ethylenically unsaturated dicarboxylic acid (for example, maleic acid, itaconic acid, citraconic acid, and the like), ethylenically unsaturated dicarboxylic anhydrides (for example, maleic anhydride, itaconic anhydride, and the like); hydroxyl group-containing monomers such as 2-hydroxyethyl(meth)acrylates, 2-hydroxypropyl(meth)acrylates, 4-hydroxybutyl (meth)acrylates, 6-hydroxyhexyl(meth)acrylates, 8-hydroxyoctyl(meth) acrylates, 10-hydroxydecyl (meth)acrylates, 12-hydroxylauryl(meth)acrylates, and (4-hydroxymethylcyclohexyl)-rnethyl acrylate; sulfonic group-containing monomers such as 2-acrylamido-2-methylpropanesulfonic acid and sulfopropyl acrylate; phosphate group-containing monomers such as 2-hydroxyethylacryloyl phosphate; vinyl monomers such as vinyl acetate, N-vinylcarboxamide, styrene, and N-vinylcaprolactam; acrylic ester monomers such as glycidyl (meth)acrylates, tetrahydrofurfuryl(meth)acrylates, polyethylene glycol(meth)acrylates, polypropylene glycol(meth)acrylates, fluorine (meth)acrylates, silicone (meth)acrylates, and 2-methoxyethyl acrylate, and the like.

As copolymerizable monomers, amphiphile monomers are preferred from the viewpoint of increasing affinity of the monomers (m1) and (m2). Accordingly, among them, hydroxyl group-containing monomers, carboxyl group-containing monomers and acrylic ester monomers are preferred. Particularly, as the hydroxyl group-containing monomers, hydroxyethyl acrylate is preferred, as the acrylic ester monomers, 2-methoxyethyl acrylate is preferred, and as the carboxyl group-containing monomers, an acrylic acid is preferred.

When the monomer (m3) is used as a monomer component constituting an acrylic copolymer, the monomer (m3) is preferably 30% by weight or less (for example, 1 to 30% by weight), more preferably 25% by weight or less (for example, 1 to 25% by weight), based on the total amount (total monomer components) of monomer components constituting an acrylic copolymer. When the content is more than 30% by weight, there may be problems in the balance of adhesive reliability and flexibility.

In the invention, the acrylic copolymer is formed using a known or typical polymerization method (for example, solution polymerization, emulsion polymerization, mass polymerization, photopolymerization using photopolymerization initiators, and the like). Among them, since the compatibility of the monomers (m1) and (m2) is not good in the invention, when single copolymerization of monomer components [for example, one obtained by mixing the monomers (m1) with (m2), and by adding polymerization initiators (photopolymerization initiators in the case of using photopolymerization), according to necessity, to the mixtures constituted by monomer components only to copolymerize the monomers (m1) and (m2) (one obtained by the irradiation of an active energy ray such as ultraviolet ray in the case of using photopoymerization) to copolymerize the monomers (m1) with (m2))] is difficult, solution polymerization through solvents is preferred.

In solution polymerization, curing reaction by heat is used by using thermal polymerization initiators. Examples of the thermal polymerization initiators include azo thermal polymerization initiators such as 2,2'-azobisisobutyronitrile, 2,2'-azobis-2-methylbutyronitrile, dimethyl-2,2'-azobis(2-methylpropionate), 4,4'-azobis-4-cyanovaleric acid, azobisisovaleronitrile, 2,2'-azobis(2-amidinopropane) dihydrochloride, 2,2'-azobis[2-(5-methyl-2-imidazolin-2-yl)propane]dihydrochloride, 2,2'-azobis(2-methylpropionamidine) disulfate, and 2,2'-azobis(N,N'-dimethyleneisobutylamidine) dihydrochloride; peroxide thermal polymerization initiators such as dibenzoyl peroxide and tert-butyl permaleate; and redox thermal polymerization initiators. Thermal polymerization initiators can be used alone or in combination of two or more kinds thereof.

The amount of the thermal polymerization initiators used is not particularly limited, and conventionally may be the range to be used as the thermal polymerization initiators. For example, the amount is preferably 0.01 to 5 parts by weight, and more preferably 0.05 to 3 parts by weight, based on 100 parts by weight of monomer components constituting an acrylic copolymer.

In the solution polymerization, various kinds of general solvents can be used. These solvents include organic solvents, for example, esters such as ethyl acetate and n-butyl acetate; aromatic hydrocarbons such as toluene and benzene; aliphatic hydrocarbons such as n-hexane and n-heptane; alicyclic hydrocarbons such as cyclohexane, and methyl cyclohexane; ketones such as methyl ethyl ketone, and methyl isobutyl ketone. The solvents can be used alone or in combination of two or more kinds thereof.

The glass transition temperature (Tg) of acrylic copolymers is preferably -10°C or less (for example, -70 to -10°C), and more preferably -20°C or less (for example, - 70°C to -20°C). When the pressure-sensitive adhesive layer (Y) is formed by the pressure-sensitive adhesive composition containing, as a main component, an acrylic copolymer of which monomers have a composition such that Tg falls within the above range, good adhesive performance (tackiness, and the like) may be exhibited at room temperature (approximately 5°C to 35°C, particularly 20°C to 25°C).

Further, Tg of the acrylic copolymer is the glass transition temperature (theoretical value) represented by the following formula.

$$1/\mathrm{Tg} = (W_1/\mathrm{Tg}_1) + (W_2/\mathrm{Tg}_2) + \ldots + (W_n/\mathrm{Tg}_n)$$

In the formula, Tg represents the glass transition temperature (unit:K) of an acrylic polymer, $\mathrm{Tg}_i$ (i=1,2...n) represents the glass transition temperature (unit:K) of a homopolymer of monomer i, and $W_i$ (i=1,2...n) represents weight ratio in total monomer components of monomer i. Further, the formula is the calculation formula of Tg when the acrylic polymer includes n kinds of the monomer component (monomer 1, monomer 2, ... and monomer n).

In the invention, from the viewpoint that the pressure-sensitive adhesive layer (Y) is crosslinked to increase durability, it is preferred that crosslinking agents be added to pressure-sensitive adhesive composition.

Crosslinking agents are not particularly limited, but, for example, polyisocyanate compounds, epoxy compounds, aziridine compounds, metal chelate compounds, and melamine compound are preferably used. Further, polyfunctional (meth)acrylate may be used as a crosslinking agent. Among them, from the viewpoint of easy handling for the balance of pressure-sensitive adhesiveness and workability, polyisocynate compounds and polyfuntional monomers are preferred. Further, crosslinking agents may be used alone or two or more crosslinking agents may be used by mixing.

Examples of the polyisocyanate compounds include tolylene diisocyanate, hexamethylene diisocyanate, polymethylene polyphenyl isocyanate, diphenyl methane diisocyanate, dimer of diphenyl methane diisocyanate, reaction products of trimethylol propane and tolylene diisocyante, reaction products of trimethylol propane and hexamethylene diisocyante, polyether polyisocyanate and polyester polyisocyanate.

When polyfunctional (meth)acrylates are a compound having at least two (meth)acryloyl groups, these can be used without particular limitation. Examples of the polyfunctional (meth)acrylates include trimethylol propane tri(meth)acrylate, tetramethylol methane tetraacrylate, pentaerythritol di(meth)acrylates, pentaerythritol tri(meth)acrylates, pentaerythritol tetra(meth)acrylates, 1,2-ethylene glycol di(meth)acrylates, 1,4-butylene glycol di(meth)acrylate, 1,6-hexanediol di(meth)acrylates, 1,12-dodecanediol di(meth)acrylates, dipentaerythritol monohydroxy penta(meth)acrylate, dipentaerythritol hexa (meth)acrylate, polyethyleneglycol di(meth)acrylate, hexanediol di(meth)acrylate, (poly)ethylene glycol di(meth)acrylate, (poly)propylene glycol di(meth)acrylate, neopentyl glycol di(meth)acrylate, tetramethylol methane tri(meth)acrylate, allyl(meth)acrylate, vinyl(meth)acrylate, epoxy acrylate, polyester acrylate, urethane acrylate and reactive hyperbranched polymers, having a plurality of (meth)acryloyl groups at the terminal [for example, trade name "CN2300", "CN2301", "CN2320", and the like, made by SARTOMER corporation].

The amount of the crosslinking agents added is specifically not limited, so far as the amount is capable of obtaining desirable gel fraction. For example, the amount is preferably 0.001 to 5 parts by weight, is more preferably 0.002 to 4 parts by weight, and is further preferably 0.002 to 3 parts by weight, based on 100 parts by weight of acrylic copolymer. When the amount is less than 0.001 parts by weight, there is a concern that the cohesive force of the pressure-sensitive adhesive layer (Y) is lowered. On the other hand, when the amount is more than 5 parts by weight, there is a concern that flexibility or tackiness is lowered in the pressure-sensitive adhesive layer (Y).

Examples of other additives include tackifiers such as rosin derivative resins, polyterpene resins, petroleum resins, and oil-soluble phenolic resins; plasticizers; fillers; age inhibitors and surfactants. Further, crosslinking accelerator may be used.

The pressure-sensitive adhesive layer (Y) is formed by applying the pressure-sensitive adhesive composition on a suitable support to form a coated layer, and then by heating or drying the coated layer according to necessity.

Further, coating methods used at the time of coating are not particularly limited, and known methods may be used. Examples of these methods include a slot die coating, a reverse gravure coating, a microgravure coating, a dip coating, a spin coating, a brush coating, a roll coating, a flexo printing, and the like. As the coating equipment used at the time of coating, coating equipment which is generally used may be used without specific limitation. Examples of this coating equipment include roll coater such as a reverse coater and a gravure coater; a curtain coater; a lip coater; a die coater and a knife coater.

From the viewpoint of the balance of pressure-sensitive adhesiveness, the pressure-sensitive adhesive layer (Y) has preferably a gel fraction (solvent insoluble fraction) of 20 to 80% by weight, and is more preferably 25 to 75% by weight. When the gel fraction is less than 20% by weight, there is a concern that the cohesive force is insufficient and adhesive reliability or processability is lowered. Whereas when the gel fraction is more than 80% by weight, there is a concern that the tackiness is insufficient, or adhesive reliability is lowered.

The gel fraction of the pressure-sensitive adhesive layer (Y) may be determined in the following manner. A porous polytetrafluoroethylene film (trade name: Nitofuron (registered trade mark) NTF-1122, made by Nitto Denko corporation, thickness of 85$\mu$m) is cut into a size of 100mm$\times$100mm and, additionally, kite string (thickness: 1.5mm) is cut into a length of approximately 100mm and the weight thereof is measured (the weight of porous polytetrafluoroethylene film and kite string is regarded as "weight (A)"). Subsequently, the predetermined amount (approximately lg) of the pressure-sensitive adhesive layer (Y) is enclosed with the porous polytetrafluoroethylene film. An enclosed pore is tied using kite string, and a packing (there may be a case where such is referred to as a "pressure-sensitive adhesive layer-containing packing") is prepared such that the pressure-sensitive adhesive layer (Y) is enclosed. This pressure-sensitive adhesive layer-containing packing is weighed, the weight (A) of the porous polytetrafluoroethylene film and kite string is subtracted from the weight of this pressure-sensitive adhesive layer-containing packing, and the weight of the pressure-sensitive adhesive layer (Y) is determined. Further, the weight of the pressure-sensitive adhesive layer (Y) is regarded as weight (B). Subsequently, pressure-sensitive adhesive layer-containing packing is immersed in 45ml of ethyl acetate at room temperature (for example, 23°C) for 7 days, and the sol component only in the pressure-sensitive adhesive layer (Y) is eluted out of a porous polytetrafluoroethylene film. After immersion, the pressure-sensitive adhesive layer-containing packing immersed in ethyl acetate for 7 days is taken out, ethyl acetate which is stuck on porous polytetrafluoroethylene film is wiped out and dried with a dryer at 130°C for 2 hours. After drying, the pressure-sensitive adhesive layer-containing packing was weighed. The weight of the pressure-sensitive adhesive layer-containing packing is regarded as weight(C).

The gel fraction (% by weight) of the pressure-sensitive adhesive layer (Y) is calculated by the following formula:

$$\text{Gel fraction (\% by weight)}=[(C-A)/B \times 100]$$

The thickness of the pressure-sensitive adhesive layer (Y) is not particularly limited, and is preferably 10 to 400 $\mu$m, more preferably 20 to 200 $\mu$m, and still more preferably 30 to 100 $\mu$m, regarding the point of ensuring good adhesive performance (for example, pressure-sensitive adhesive strength). The pressure-sensitive adhesive layer (Y) may have a single-layer form or a lamination form.

Release liner

The pressure-sensitive adhesive layer (Y) surface (pressure-sensitive adhesive face) of the acrylic pressure-sensitive adhesive sheet of the invention may be protected by a release liner (separator, release film) until being used. Further, when the viscoelastic material layer (X) surface has pressure-sensitive adhesiveness, or when known pressure-sensitive adhesive layers are formed on the face opposite to the face where the pressure-sensitive adhesive layer (Y) of the viscoelastic material layer (X) is formed, there may be a case where an acrylic pressure-sensitive adhesive sheet act as a double-coated pressure-sensitive adhesive sheet. The pressure-sensitive adhesive face, in the case of acting as a double-coated pressure-sensitive adhesive sheet, may be protected by two sheets of release liners respectively, and may be protected by the form where one sheet of release liner of which both faces are release faces is wound with a roll. Release liner is used as a protecting material of the pressure-sensitive adhesive layer (Y) and is peeled when the layer is affixed to adherends. Further, a release liner is peeled at the time of using the acrylic pressure-sensitive adhesive sheet of the invention (at the time of adhering) is not included in the "base" shown in the following.

These liners can use typical release paper, and are not particularly limited. Examples of the usable liners include a base having a release treated layer, a low adhesive base containing fluorine polymers, a low adhesive base containing non-polarity polymers, and the like. Examples of the low adhesive base containing fluorine polymer include a plastic film, a paper, or the like, of which the surface is treated by release treating agents such as silicone, long chain alkyl, fluorine, and molybdenum sulfide. Examples of the fluorine polymer of the low adhesive base containing fluorine polymers include polytetrafluoroethylene, polychlorotrifluoxoethylene, polyvinyl fluoride, polyvinylidene fluoride, tetrafluoroethylene/hexafluoropropylene copolymer, chlorofluoroethylene/vinylidene fluoride copolymer, and the like. Examples of the non-polarity polymer of low adhesive base containing non-polarity polymers include olefin resins (for example, polyethylene, polypropylene, and the like) and the like. Further, a release liner may be formed by known and typical methods. Further, the thickness of the release liner is not particularly limited.

Other layers

The acrylic pressure-sensitive adhesive sheet of the invention may have other layers (for example, an intermediate layer, an undercoat, and the like) within a range not damaging the effect of the invention. More specifically, examples of the intermediate layers include a coating layer of a release agent to impart releasability, a coating layer of an undercoat agent to improve close adhesive force, a layer to impart good deformability to the sheet, a layer to provide a larger adhesive area to adherends, a layer to increase an adhesive force to adherends, a layer to allow the sheet to satisfactorily follow the surface shape of adherends, a layer to more satisfactorily reduce the adhesive force of the sheet by heating, a layer to allow the sheet to be peeled more satisfactorily after heating, and the like. Further, the sheet may have known and typical pressure sensitive adhesive layers other than the pressure-sensitive adhesive layer (Y).

Base

When the acrylic pressure-sensitive adhesive sheet of the invention has bases, the bases are not particularly limited and, for example, include suitable thin leafy body e.g. paper bases such as papers; fiber bases such as fabrics, nonwovens, and nets; metal bases such as metal foils and metal plates; plastic bases such as films or sheets of various resins (olefin resin, polyester resin, polyvinyl chloride resin, vinyl acetate resin, amide resin, polyimide resin, polyetherether ketone (PEEK), polyphenylene sulfide(PPS), and the like); rubber bases such as rubber sheets; foams such as foam sheets or the laminators (particularly, laminators of plastic bases with other bases, laminators of plastic films (or sheets), and the like), all of which can be used.

The thickness of the base is not particularly limited and, for example, may be preferably 10 to 500 $\mu$m, more preferably 12 to 200 $\mu$m, and further preferably 15 to 100 $\mu$m. Further, the base may be single layer, or plural layers. Further, on the base, according to necessity, various treatments such as rear treatment, antistatic treatment, and undercoat treatment, may be performed.

Method for Producing Acrylic Pressure-Sensitive Adhesive Sheets

In the invention, the acrylic pressure-sensitive adhesive sheet is obtained by a step (i) of prepearing an acrylic copolymer from monomer mixtures having a monomers (m1) and (m2) as an essential monomer component, in which a content of the monomer (m1) is 50 to 99.9% by weight and the content of the monomer (m2) is 0.1 to 25% by weight, based on the total monomer components, thereby preparing a pressure-sensitive adhesive composition having the acrylic copolymer as a main component; and a step (ii) of forming the pressure-sensitive adhesive layer (Y) on at least one face of the viscoelastic material layer (X) containing hollow microspheres by the pressure-sensitive adhesive composition prepared in the step (i).

In step (i), a pressure-sensitive adhesive composition forming the pressure-sensitive adhesive layer (Y) is prepared. The pressure-sensitive adhesive composition can be obtained, in case where an acrylic copolymer as a main component is obtained by solution polymerization, by subjecting a monomer mixture solution including at least a monomer component and solvent of the monomers (m1) and (m2) to solution polymerization to prepare a solution containing an acrylic copolymer (there may be a case where such is referred to as "acrylic copolymer solution"), and then adding additives, according to necessity, to the acrylic copolymer solution.

In step (ii), the pressure-sensitive adhesive layer (Y) is formed on at least one face of the viscoelastic material layer (X) using the pressure-sensitive adhesive composition obtained in step (i). More specifically, for example, a pressure-sensitive adhesive composition is applied on at least one face of the viscoelastic material layer (X) to form a coated layer, and then is heated and dried according to necessity, so that the pressure-sensitive adhesive layer (Y) is formed on the viscoelastic material layer (X), or the pressure-sensitive adhesive composition is applied on a suitable support (for example the above release liner, and the like) to form a coated layer, and then is heated and dried according to necessity, to form the pressure-sensitive adhesive layer (Y) on the suitable support, the pressure-sensitive adhesive layer (Y) on the support is transferred in at least one face of the viscoelastic material layer (X) to form the pressure-sensitive adhesive layer (Y) on the viscoelastic material layer (X), thereby forming the pressure-sensitive adhesive layer (Y) in at least one face of the viscoelastic material layer (X).

Acrylic pressure-sensitive adhesive sheet

The acrylic pressure-sensitive adhesive sheet of the invention has a construction where the pressure-sensitive adhesive layer (Y) is formed on at least one face of the viscoelastic material layer (X), and exhibits good adhesiveness to various adherends such as coatings, metals, and plastics on a pressure-sensitive adhesive face provided by the pressure-sensitive adhesive layer (Y) is. This is because the monomer (m2) which is monomer components constituting the acrylic copolymer as main components of a pressure-sensitive adhesive composition forming the pressure-sensitive adhesive layer (Y), and which has strength of suitable polarity is used, and therefore the pressure-sensitive adhesive layer (Y) has a suitable polarity, and a suitable cohesive force and has a stress relaxation.

Examples of the coatings of the adherends include automotive coatings such as acid-rain resistant coatings, and coatings where a surface control agent is bleeding out. Examples of the acid-rain resistant coatings include various coatings such as polyester/melamine coatings, alkyd/melamine coatings, acrylic/melamine coatings, acrylic/urethane coatings, and acrylic/polyacid curing agent coatings. Examples of the coatings where surface control agents are bleeding out include coatings where surface control agents such as acrylic, vinyl, silicone, and fluorine are bleeding out.

The acrylic pressure-sensitive adhesive sheet of the invention exhibits good adhesiveness to low polarity coatings such as coatings having small melamine content, or coatings having no melamine, or coatings of which a low polarity surface control agent (for example, acrylic surface control agent such as butyl acrylate, and the like) bleeds out, among the coatings, since the pressure-sensitive adhesive layer (Y) has a suitable polarity, and suitable cohesive force and a stress relaxation.

The acrylic pressure-sensitive adhesive sheet of the invention is particularly preferably used with coatings having a ratio of the peak derived from an ester stretching vibration (at 1730 $cm^{-1}$) (ester peak; ester absorption intensity; ester intensity) to the peak derived from a melamine stretching vibration (at 814 $cm^{-1}$) (melamine peak; melamine absorption intensity; melamine intensity) [melamine/ester peak ratio (intensity ratio of melamine to ester)] of 0.4 or less (for example, 0 to 0.4), preferably 0.3 or less (for example, 0 to 0.3), and more preferably 0.2 or less (for example, 0 to 0.2), as determined through attenuated total reflectance measurement (ATR) using Fourier transform infrared spectroscopy (FT-IR). In this connection, acrylic/melamine coatings have large melamine/ester peak ratios, because they have undergone crosslinking with melamine. In contrast, acid-rain resistant coatings have small melamine/ester peak ratios, because they have not undergone crosslinking with melamine.

Specifically, the melamine/ester peak ratio is determined through ATR using FT-IR, in which the melamine peak is defined as the height of top of peak at 814 $cm^{-1}$ from a base line as a line passing 725 $cm^{-1}$ to 825 $cm^{-1}$; the ester peak is defined as the height of top of peak at 1730 $em^{-1}$ from a base line as a line passing 1660 $cm^{-1}$ to 1780 $cm^{-1}$, and the melamine/ester peak ratio is calculated from the obtained melamine peak and ester peak according to

the following equation:

$$\text{(Melamine/Ester peak ratio)}=\text{(Melamine peak)}/\text{(Ester peak)}$$

Further, the acrylic pressure-sensitive adhesive sheet of the invention exhibits good adhesiveness to low polarity polyolefin resin such as polyethylene or polypropylene, as described above.

Further, the acrylic pressure-sensitive adhesive sheet of the invention has the pressure-sensitive adhesive layer (Y) having suitable cohesive force and stress relaxation, and has the viscoelastic material layer (X) as a foam layer which exhibits good thickness unevenness absorbability and good stress dispersibility, so that repelling resistance is excellent.

The acrylic pressure-sensitive adhesive sheet of the invention, irrespective of the polarity of adherends, has an excellent pressure-sensitive adhesiveness, particularly adhesiveness, and good properties in both repelling resistance and holding property, with reference to low polarity adherends or high polarity adherends. The acrylic pressure-sensitive adhesive sheet of the invention may be used for adhesion to automotive coating, protection of automotive coating surface, affixation to household appliances (for example, affixation of polypropylene material with ABS material), affixation to housing facility equipment, and the like.

EXAMPLES

The present invention will be illustrated in further detail based on examples below, but these examples are not to be construed as limiting the scope of the present invention.

Example 1

Production of viscoelastic material layer (X)

To a monomer mixture of 90 parts by weight of 2-ethylhexyl acrylate and 10 parts by weight of acrylic acid as a monomer component, were mixed 0.05 parts by weight of 2,2-dimethoxy-1,2-diphenylethan-1-one as a photopolymerization initiator (trade name "irgacure 651" by Ciba Japan K.K.) and 0.05 parts by weight of 1-hydroxy-cyclohexyl-phenylketone (trade name "Irgacure 184" by Ciba Japan K.K.), followed by irradiatingan ultraviolet ray to a viscosity (BH type viscometer, No. 5 rotor, 10 rpm, measured at a temperature of 30˚C.) of 15 Pa·s, thereby preparing a partially polymerized composition (syrup A).

To 100 parts by weight of the syrup A was added 0.1 parts by weight of 1,6-hexanediol diacrylate as an inner crosslinking agent, followed by further adding hollow glass balloons (trade name "CEL-STAR Z-27" by Tokai Kogyo Co., Ltd.) to an amount of 30% by volume based on the total volume of the syrup. To the syrup containing the hollow glass balloons was added 1.0 part by weight of a fluorine surfactant (made by AGC Seimi Chemical Co., Ltd.; an acrylic copolymer having polyoxyethylene groups and fluorinated hydrocarbon groups in side chain and having a weight-average molecular weight Mw of 8300) to be mixed homogeneously, thereby preparing a precursor for pressure-sensitive adhesive. The precursor had a content of hollow glass balloons of about 23% by volume based on the total volume of the precursor for pressure-sensitive adhesive.

A nitrogen gas was introduced into the precursor for pressure-sensitive adhesive, followed by being mixed with cell. A nitrogen gas was introduced using a device that includes a stator having a multiplicity of fine teeth arranged on a disc having a through hole at the center part, and a rotor facing the stator and having fine teeth, similarly to the stator arranged on the disc. The cells were mixed to about 15% by volume to the total volume of the ejected liquid, followed by obtaining a cell-mixed pressure-sensitive adhesive composition.

The cell-mixed pressure-sensitive adhesive composition was introduced onto a roll coater for wet lamination through a tube (diameter: 19 mm, length: approximately 1.5 m), a dried and cured layer is applied between release-treated surfaces of two sheets of the release liners which are different from the releasing force, so that the layer has a thickness of 1.2mm. Incidentally, the release liners were trade name "MRF38" made by Mitsubishi Polyester Film GmbH (a release liner made from polyethylene terephthalate where one face had been subjected to release treatment on one side, thickness: $38\mu$m); and trade name "MRN38" by Mitsubishi Polyester Film GmbH (a release liner made from polyethylene terephthalate where one face had been subjected to release treatment on one side, thickness: $38\mu$m), respectively. That is, a cell-mixed pressure-sensitive adhesive composition is disposed between the release liners. Then, an ultraviolet ray was irradiated at an illuminance of 5 mW/cm$^2$ to both faces of the sheet for 3 minutes to cure the layer of a cell-mixed pressure-sensitive adhesive composition to prepare the viscoelastic material layer sheet of a release liner/viscoelastic material layer of a cell-mixed pressure-sensitive adhesive/release liner.

Production of pressure-sensitive adhesive layer (Y)

To a reaction vessel equipped with a cooling tube, an inlet for nitrogen gas, a thermometer, a dropping funnel, and a stirring blade, was added 0.1 parts by weight of 2,2-azobisisobutyronitrile (AIBN) as a polymerization initiator, 85 parts by weight of 2-ethyl hexyl acrylate (2EHA, Tg of homopolymer: -70˚C) as a monomer component, and 92 parts by weight of ethyl acetate as a solvent, followed by stirring under an atmosphere of nitrogen gas at room temperature for 1 hour. Subsequently, the content (a solution containing the total amount of monomer components) was heated to 60˚C and was polymerized under nitrogen gas flow in the reaction vessel, while dropping 0.2 parts by weight of 2,2-azobisisobutyronitrile (AIBN) as a polymerization initiator, 15 parts by weight of N-hydroxyethyl acryl amide (HEAA, Tg of homopolymer:98˚C) and 25 parts by weight of ethyl acetate as a solvent, have been prepared in a dropping funnel, over 3 hours. Acrylic polymer solution was obtained by such continuous solution polymerization.

To the obtained acrylic polymer solution, was added 0.1 parts by weight (solid calculation) of isocyanate crosslinking agent (reaction product of trimethylol propane and tolylene diisocyanate, trade name "Coronet L" made by Nippon Polyurethane Industry Co., Ltd., C/L), followed by obtaining a pressure-sensitive adhesive composition.

The pressure-sensitive adhesive composition was applied on the release face (release-treated face) of the release liner [poly(ethylene terephthalate) base (trade name "MRF38" by Mitsubishi Polyester Film GmbH, thickness:38$\mu$m), of which one face had been subjected to release treatment], with applicator, was dried at 100˚C for 2 minutes, and formed a pressure-sensitive adhesive layer of 50$\mu$m on the release liner. The separate release liner was affixed such that a release face thereof contacts a pressure-sensitive adhesive layer on the adhesive layer, so that a pressure-sensitive adhesive layer sheet of release liner/pressure-sensitive adhesive layer/release liner was produced.

Further, the gel fraction of the pressure-sensitive adhesive layer was 57.7% by weight.

A release liner was peeled from one side of the viscoelastic material layer sheets to expose the viscoelastic material layer, and a release liner was peeled from one side of the pressure-sensitive adhesive layer sheet to expose the pressure-sensitive adhesive layer, followed by affixing so as to contact the viscoelastic material layer sheet and the pressure-sensitive adhesive layer sheet with the viscoelastic material layer and the pressure-sensitive adhesive layer to produce an acrylic pressure-sensitive adhesive sheet.

Example 2

In "Production of pressure-sensitive adhesive layer (Y)", an acrylic pressure-sensitive adhesive sheet was produced by the same method as Example 1, except that: 80 parts by weight of 2-ethyl hexyl acrylate (2EHA, Tg of homopolymer: -70˚C) as a monomer component, and 82 parts by weight of ethyl acetate as a solvent was added to a reaction vessel equipped with a cooling tube, an inlet for nitrogen gas, a thermometer, a dropping funnel, and a stirring blade; 20 parts by weight of N-hydroxyethyl acryl amide (HEAA, Tg of homopolymer:98˚C), and 35 parts by weight of ethyl acetate as a solvent, prepared in a dropping funnel were used; and 0.05 parts by weight (solid calculation) of isocyanate crosslinking agent (reaction product of trimethylol propane and tolylene diisocyanate, trade name "Coronet L" made by Nippon Polyurethane Industry Co., Ltd., C/L) were added to the obtained acrylic polymer solution.

Further, the gel fraction of the pressure-sensitive adhesive layer was 65.3% by weight

Example 3

Production of viscoelastic material layer (X)

The viscoelastic material layer sheet of a release liner/viscoelastic material layer including a cell-mixed pressure-sensitive adhesive/release liner was produced by the same method as Example 1.

Production of pressure-sensitive adhesive layer (Y)

To a reaction vessel equipped with a cooling tube, an inlet for nitrogen gas, a thermometer, a dropping funnel, and a stirring blade, was added 0.1 parts by weight of 2,2-azobisisobutyronitrile (AIBN) as a polymerization initiator, 90 parts by weight of butyl acrylate (BA, Tg of homopolymer: -54˚C) as a monomer component, and 82 parts by weight of ethyl acetate as a solvent, followed by stirring under an atmosphere of nitrogen gas at room temperature for 1 hour. Subsequently, the content (a solution containing the total amount of the monomer components) was heated to 60˚C and was polymerized under nitrogen gas flow in the reaction vessel, while dropping 0.2 parts by weight of 2,2-azobisisobutyronitile (AIBN) as a polymerization initiator, 5 parts by weight of N-hydroxyethyl acryl amide (HEAA, Tg of homopolymer:98˚C), 5 parts by weight of N-hydroxymethyl acrylamide (N-MAM, Tg of homopolymer: 165˚C) and 81 parts by weight of ethyl acetate as a solvent, prepared in a dropping funnel, over 3 hours. An acrylic polymer solution was obtained by such continuous solution polymerization.

To the obtained acrylic polymer solution, was added 0.1 parts by weight (solid calculation) of isocyanate crosslinking agent (reaction product of trimethylol propane and tolylene diisocyanate, trade name "Coronet L" made by Nippon Polyurethane Industry Co., Ltd., C/L), followed by obtaining a pressure-sensitive adhesive composition.

The pressure-sensitive adhesive composition was applied on the release face (release-treated face) of the release liner [poly(ethylene terephthalate) base (supplied under the trade name "MRF38" by Mitsubishi Polyester Film GmbH, thickness:38μm), one face of which had been subjected to release treatment], with applicator, was dried at 100˚C for 2 minutes, and formed a pressure-sensitive adhesive layer of 50μm on the release liner. The separate release liner was affixed such that a release face thereof contacts a pressure-sensitive adhesive layer on the adhesive layer, so that a pressure-sensitive adhesive layer sheet of release liner/pressure-sensitive adhesive layer/release liner was produced. Further, the gel fraction of the pressure-sensitive adhesive layer was 30.5% by weight.

An acrylic pressure-sensitive adhesive sheet was produced by the same method as in Example 1.

Comparative example 1

Production of pressure-sensitive adhesive layer (Y)

To 100 parts by weight of monomer mixture including 90 parts by weight of 2-ethyl hexyl acrylate (2EHA, Tg of homopolymer: -70˚C) and 10 parts by weight of acrylic acid (AA, Tg of homopolymer: 106˚C), were mixed 0.05 parts by weight of 2,2-dimethoxy-1,2-diphenylethan-1-one (trade name "Irgacure 651" made by Ciba Japan K.K.) and 0.05 parts by weight of 1-hydroxy-cyolohexyl-phenylketone (trade name "Irgacure 184" made by Ciba Japan K.K.) as a photopolymerization initiator. This mixture was stirred under an atmosphere of nitrogen gas, thereby removing dissolved oxygen, followed by being exposed with an ultraviolet ray thereby giving a partially photopolymerized composition. Therefore, a monomer syrup (a partially polymerized product) having 11 % by weight conversion was obtained. To 100 parts by weight of the monomer syrup, was added 0.04 parts by weight of 1,6-hexanediol diacrylate(HDDA) to obtain a photopolymerization pressure-sensitive adhesive composition.

The photopolymerization pressure-sensitive adhesive composition was applied on the release face (release-treated face) of the release liner [poly(ethylene terephthalate) base (supplied under the trade name "MRF38" by Mitsubishi Polyester Film GmbH, thickness:38μm), one face of which had been subjected to release treatment] so that the thickness of the obtained pressure-sensitive adhesive layer is 50μm, to form a coated layer. A separate release liner was affixed to the coated layer so as to contact the coated layer with the release face. Subsequently an ultraviolet ray was irradiated under conditions of illuminance of 4 mW/cm$^2$, and quantity of light of 720mJ/cm$^2$ to both faces of the sheet to cure a photopolymerization pressure-sensitive adhesive composition to obtain the adhesive layer sheet of a release liner/ pressure-sensitive adhesive layer/release liner.

Further, the gel fraction of the pressure-sensitive adhesive layer was 60.6% by weight.

A viscoelastic material layer sheet which is the same as Example 1 was used, and an acrylic pressure-sensitive adhesive sheet was prepared by the same method as Example 1.

Comparative example 2

In "Production of pressure-sensitive adhesive layer (Y)", the acrylic pressure-sensitive adhesive sheet was produced by the same method as Comparative Example 1 except that a monomer mixture including 70 parts by weight of 2-ethyl hexyl acrylate (2EHA, Tg of homopolymer: -70˚C) and 30 parts by weight of N,N-dimethylaerylamide (DMAA, Tg of homopolymer: 119˚C) was used, and 0.08 parts by weight of 1,6-hexanediol diacrylate(HDDA) was added to the monomer syrup.

Further, the gel fraction of the pressure-sensitive adhesive layer was 79.2% by weight.

Evaluation

With reference to Examples and comparative examples, adhesive force, repelling resistance and holding property were measured or evaluated. The results have shown in Table 1.

Adhesive Force

The release film was peeled from the viscoelastic material layer (X) of the acrylic pressure-sensitive adhesive sheets obtained in Examples and Comparative Example, and a polyethylene terephthalate film which was not subjected to release treatment and which had a thickness of 50μm was affixed to the viscoelastic material layer (X) surface. This sheet was cut into a width of 25mm to make a strip sample. The release film affixed to the pressure-sensitive adhesive layer (Y) surface was peeled, and the pressure-sensitive adhesive layer (Y) surface was affixed to a clean adherend which is reciprocally rubbed and washed ten times using a clean waste immersed with isopropyl alcohol, by compression bonding due to one-way moving of a 5-kg roller thereon. After storing it at 40°C, for 2 days, it was left for 30 minutes under the condition of 23°C×50%RH, and a peeling strength [N/25mm] was measured using a tension tester ("TCM-1kNB", made by Minebea Co., Ltd.) under the condition of a tension rate of 50mm/minute, and a peeling angle of 180°. The used adherends include ABS plate ("Kobe sheet ABS plate", Shin-Kobe Electric Machinery Co., Ltd.), PP plate (polypropylene plate) ("Kobe sheet polypropylene plate", Shin-Kobe Electric Machinery Co., Ltd.) and a plate ("acid-rain resistant plate for automotive", made by Kansai Paint Co., Ltd., melamine peak/ester peak ratio is 0.03) where acid-rain resistant coatings for automotive is formed on a surface.

Evaluation criteria

With reference to an ABS plate

Very good (◎): in the case that a pressure-sensitive adhesive force is 40 [N/25mm] or more
Good (○): in the case that a pressure-sensitive adhesive force is 30[N/25mm] or more and less than 40 [N/25mm]
Poor (X): in the case that a pressure-sensitive adhesive force is less than 30 [N/25mm]

With reference to a PP plate

Very good (◎): in the case that a pressure-sensitive adhesive force is 20 [N/25mm] or more
Good (○): in the case that a pressure-sensitive adhesive force is 15[N/25mm] or more and less than 20 [N/25mm]
Poor (X): in the case that a pressure-sensitive adhesive force is less than 15 [N/25mm]

With reference to an acid-rain resistant plate for automotive

Very good (◎): in the case that a pressure-sensitive adhesive force is 40 [N/25mm] or more
Good (○): in the case that a pressure-sensitive adhesive force is 30(N/25mm] or more and less than 40 [N/25mm]
Poor (X): in the case that a pressure-sensitive adhesive force is less than 30 [N/25mm]

Repelling resistance

An acrylic pressure-sensitive adhesive sheet obtained in Examples and Comparative Examples was cut into a size of a width of 10mm and a length of 90mm, the release film was peeled from the viscoelastic material layer (X), and an aluminum plate (thickness of 0.3mm) of the same size was affixed to the viscoelastic material layer (X) surface to produce a test piece. The test piece was bent along a cylinder having the diameter of 65mm in the longitudinal direction with the aluminum plate disposed inside, Then, the release film was peeled from the pressure-sensitive adhesive layer (Y). The pressure-sensitive adhesive layer (Y) surface was affixed to a clean adherend which is reciprocally rubbed and washed ten times using a clean waste immersed with isopropyl alcohol, by compression bonding due to a laminator so as not to float from the adherend. This was left at room temperature for 5 hours, the height (floating height) where the edges of test piece in the longitudinal direction were floated from the adherend was measured, and the repelling resistance was evaluated with the following evaluation criteria.
Both edges of the test piece were measured, and the sum of the floating height at both edges was taken as the value of repelling resistance.
The used adherends include PP plate (polypropylene plate) ("Kobe sheet polypropylene plate", Shin-Kobe Electric Machinery Co., Ltd.) and an acrylic plate (trade name: Acrylite, made by Mitsubishi Rayon Co., Ltd.).

Evaluation criteria

Good (O): the value of repelling resistance (the sum of floating height at both edges) is 2mm or less
Poor (X): the value of repelling resistance (the sum of floating height at both edges) is more than 2mm

Further, when the value of the repelling resistance is more than 2 mm, the acrylic pressure-sensitive adhesive sheet can not exhibit the repelling resistance.

Holding property

In an acrylic pressure-sensitive adhesive sheet obtained in Examples and Comparative Examples, the release film was peeled from the viscoelastic material layer (X), polyethylene terephthalate film which was not subjected to release treatment and which was a thickness of 50$\mu$m was affixed to the viscoelastic material layer (X) surface. This sheet was cut into a size of width of 10mm and a length of 100mm, so that a test piece was produced. Then, the release film was peeled from the pressure-sensitive adhesive layer (Y). The pressure-sensitive adhesive layer (Y) surface was affixed to the surface of a clean Bakelite plate which was reciprocally rubbed and washed ten times using a clean waste immerseed with isopropyl alcohol, under the conditions where the adhesive area was a size of width of 10mm and length of 20mm, and a part of the test piece was protruded, by reciprocally moving one times with a 2-kg roller thereon. After storing it at 40°C for 30 minutes, the Bakelite plate was taken down under of conditions of 40°C, and was left for 2 hours while applying a load of 500g to a free edge (parts protruded from the bakelite plate) of the test pieces. When the test piece was dropped from the Bakelite before the lapse of 2 hours thereafter, it was evaluated as poor (X), and when the test piece was kept on the Bakelite plate even after 2 hours, it wa evaluated as good (O).

Table 1

| | Pressure-sensitive Adhesive layer composition | | | | | | Gel fraction of Pressure-sensitive adhesive layer [% by weight] | Pressure-sensitive adhesive force [N/25mm] | | | Repelling resistance | | Holding Property |
| | Blending system (polymerization method) | Monomer component (weight ratio) | | | Crosslinking component | | | ABS | PP | acid-rain resistant plate for automotive | PP | Acryl | |
| | | m1 | m2 | m3 | kind | Added amount [parts by weight] | | | | | | | |
| Ex. 1 | 2EHA/HEAA= 2 85/15 (solution polymerization) | 85 | 15 | | C/L | 0.1 | 57.7 | 41.5 (◎) | 16.9 (◎) | 45.2 (◎) | 0 (○) | 0 (○) | ○ |
| Ex. 2 | 2EHA/HEAA= 80/20 (solution polymerization) | 80 | 20 | | C/L | 0.05 | 65.3 | 52.0 (◎) | 27.8 (◎) | 40.9 (◎) | 0 (○) | 0 (○) | ○ |
| Ex.3 | BA/HEAA/N-MAM =90/5/5 polymerization) | 90 | 10 | | C/L | 0.1 | 30.5 | 66.0 (◎) | 18.0 (○) | 38.1 (○) | 1 (○) | 0 (○) | ○ |
| Comp. Ex.1 | 2EHA/AA=90/10 (phopolymerization) | 90 | | 10 | HDDA | 0.04 | 60.6 | 38.5 (○) | 17.7 (◎) | 37.2 (○) | 0 (○) | 0 (○) | ○ |
| Comp. Ex.2 | 2EHA/DMAA =70/30 (phopolymerization) | 70 | | 30 | HDDA | 0.08 | 79.2 | 66.0 (○) | 15.0 (○) | 51.0 (◎) | 12 (X) | 0 (○) | ○ |

## EP 2 228 419 A1

In the table 1, "ABS" represents "ABS plate", "PP" represents "PP plate" and "acryl" represents "acryl plate"

Examples were the same level as in Comparative Example 1 in repelling resistance and holding property. Further, Examples were equal to or more than Comparative Example 1 with reference to adhesive force. Comparative Example 2 has high adhesive force with reference to ABS plate, and poor repelling resistance with reference to PP plate, Comparative Example 2 did not obtain the target properties.

While the invention has been described in detail with reference to specific embodiments thereof, it will be apparent to one skilled in the art that various changes and modifications can be made therein without departing from the spirit and scope thereof.

Incidentally, the present application is based on Japanese Patent Application No. 2009-058653 filed on March 11, 2009, and the contents are incorporated herein by reference.

Also, all the references cited herein are incorporated as a whole.

According to the acrylic pressure-sensitive adhesive sheet of the invention, since the sheet has the above construction, it is possible to obtain the sheet having good pressure-sensitive adhesiveness, particularly adhesiveness, and good properties in both repelling resistance and holding property. Particularly, it is possible to obtain the sheet having a good pressure-sensitive adhesiveness, particularly adhesiveness, and good properties in both repelling resistance and holding to low polarity adherends such as automotive coatings having low polarity and plastics having low polarity.

## Claims

1.   An acrylic pressure-sensitive adhesive sheet comprising:

   a viscoelastic material layer (X) containing hollow microspheres; and
   a pressure-sensitive adhesive layer (Y) provided on at least one face of the viscoelastic material layer (X) and formed from a pressure-sensitive adhesive composition comprising, as a main component, an acrylic copolymer which is constructed from the following monomers (m1) and (m2) as an essential monomer component, in which a content of the monomer (m1) is 50 to 99.9% by weight and a content of the monomer (m2) is 0.1 to 25% by weight based on a total amount of monomer components constituting the acrylic copolymer,
   (m1) an alkyl(meth)acrylate monomer including an alkyl group having 1 to 20 carbon atoms, which is represented by the following formula (1),

$$\text{[Chem. 1] } CH_2=C(R^1)COOR^2 \qquad (1)$$

   wherein $R^1$ represents a hydrogen atom or a methyl group, and $R^2$ represents an alkyl group having 1 to 20 carbon atoms,
   (m2) an N-hydroxyalkyl(meth)acrylamide monomer including a hydroxyalkyl group having 1 to 4 carbon atoms, which is represented by the following formula (2),

$$\text{[Chem. 2] } CH_2=C(R^3)CONHR^4 \qquad (2)$$

   wherein $R^3$ represents a hydrogen atom or a methyl group, and $R^4$ represents a hydroxyalkyl group having 1 to 4 carbon atoms.

2.   The acrylic pressure-sensitive adhesive sheet according to claim 1, wherein a total content of the monomers (m1) and (m2) in the acrylic copolymer is 70% by weight or more based on the total amount of the monomer components constituting the acrylic copolymer.

3.   The acrylic pressure-sensitive adhesive sheet according to claim 1 or 2, wherein the acrylic copolymer has a glass transition temperature (Tg) of -10°C or less.

4.   The acrylic pressure-sensitive adhesive sheet according to any one of claims 1 to 3, wherein the monomer (m2) is N-(2-hydroxyethyl) (meth)acrylamide.

Europäisches
Patentamt

European
Patent Office

Office européen
des brevets

# EUROPEAN SEARCH REPORT

**Application Number**

EP 10 15 6068

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | WO 2009/054106 A1 (NITTO DENKO CORP [JP]; YAMANAKA EIJI [JP]; NAGASAKI KUNIO [JP]; HIRAO) 30 April 2009 (2009-04-30)<br>* paragraph [0195] - paragraph [0199]; examples 3, 4, 5, 6, 7 *<br>* paragraph [0200] - paragraph [0201] *<br>* claims 1, 7, 8, 9 *<br>----- | 1-4 | INV.<br>C09J7/02 |
| Y | WO 2007/111138 A1 (NITTO DENKO CORP [JP]; INOUE SHINICHI [JP]; SATAKE MASAYUKI [JP]; YANO) 4 October 2007 (2007-10-04)<br>* paragraph [0019] - paragraph [0022] *<br>* paragraph [0036] - paragraph [0037] *<br>* paragraph [0092] - paragraph [0093]; examples 1-12 *<br>* paragraph [0098]; examples 1-12; table 1 *<br>* claims 1-6 *<br>----- | 1-4 | |
| Y | EP 0 913 443 A1 (TOAGOSEI CO LTD [JP]) 6 May 1999 (1999-05-06)<br>* paragraph [0005] *<br>* paragraph [0053] *<br>* paragraph [0069] - paragraph [0070]; examples A2, A3 *<br>* paragraph [0078]; examples 2, 3; table 4 *<br>* paragraph [0084] - paragraph [0088]; examples 6, 7 *<br>* paragraph [0092]; examples 6, 7 *<br>* paragraph [0094] *<br>-----<br>-/-- | 1-4 | **TECHNICAL FIELDS SEARCHED (IPC)**<br>C09J |

The present search report has been drawn up for all claims

| Place of search | Date of completion of the search | Examiner |
|---|---|---|
| Munich | 23 June 2010 | Siemsen, Beatrice |

# EP 2 228 419 A1

Europäisches
Patentamt

European
Patent Office

Office européen
des brevets

## EUROPEAN SEARCH REPORT

**Application Number**

EP 10 15 6068

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | JP 2003 165965 A (KOHJIN CO) 10 June 2003 (2003-06-10) * paragraph [0001] * * paragraph [0018] * * paragraph [0020]; example 1 * * paragraph [0025]; example 2 * * paragraph [0034]; example 5 * * claims 1-4 * ----- | 1-4 | |
| Y | JP 2005 179561 A (NITTO DENKO CORP) 7 July 2005 (2005-07-07) * paragraph [0007] * * paragraph [0096] - paragraph [0099]; examples 3, 4 * * claims 4, 8, 10 * ----- | 1-4 | |
| | | | **TECHNICAL FIELDS SEARCHED (IPC)** |

The present search report has been drawn up for all claims

| Place of search | Date of completion of the search | Examiner |
|---|---|---|
| Munich | 23 June 2010 | Siemsen, Beatrice |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 10 15 6068

This annex lists the patent family members relating to the patent documents cited in the above-mentioned European search report.
The members are as contained in the European Patent Office EDP file on
The European Patent Office is in no way liable for these particulars which are merely given for the purpose of information.

23-06-2010

| Patent document cited in search report | | Publication date | Patent family member(s) | | Publication date |
|---|---|---|---|---|---|
| WO 2009054106 | A1 | 30-04-2009 | NONE | | |
| WO 2007111138 | A1 | 04-10-2007 | CN | 101395506 A | 25-03-2009 |
| | | | JP | 2007264092 A | 11-10-2007 |
| | | | KR | 20080088655 A | 02-10-2008 |
| | | | US | 2009104445 A1 | 23-04-2009 |
| EP 0913443 | A1 | 06-05-1999 | WO | 9803602 A1 | 29-01-1998 |
| | | | US | 6368707 B1 | 09-04-2002 |
| JP 2003165965 | A | 10-06-2003 | NONE | | |
| JP 2005179561 | A | 07-07-2005 | JP | 4145783 B2 | 03-09-2008 |

EPO FORM P0459

For more details about this annex : see Official Journal of the European Patent Office, No. 12/82

**EP 2 228 419 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005200513 A
- US 4364972 A
- JP 58500130 T
- JP 2000096012 A
- JP 2009058653 A